# EUROPEAN PATENT APPLICATION

(11) **EP 4 462 841 A1**
(43) Date of publication of application: **13.11.2024**
(21) Application number: 23773571.7
(22) Date of filing: 01.03.2023
(51) Int. Cl.: H04W 12/63

(54) **METHOD FOR VERIFYING POSITION OF TERMINAL DEVICE, AND COMMUNICATION APPARATUS**

(30) Priority: 25.03.2022 CN 202210304227
(71) Applicant: Huawei Technologies Co., Ltd., Shenzhen, Guangdong 518129 (CN)
(72) Inventor: WU, Xiaoning, Shenzhen, Guangdong 518129 (CN); HU, Xingxing, Shenzhen, Guangdong 518129 (CN); GENG, Tingting, Shenzhen, Guangdong 518129 (CN)
(74) Representative: Maiwald GmbH
(86) International application number: PCT/CN2023/079013
(87) International publication number: WO 2023/179320

(57) **Abstract**

This application discloses a method for verifying a location of a terminal device and a communication apparatus. The method includes: A first access network device receives first location information sent by the terminal device, and sends verification information to the terminal device. Then, the first access network device receives a feedback result sent by the terminal device, and verifies the first location information based on the feedback result, or the first access network device sends a received feedback result and the first location information to a core network device. The verification information includes at least one of the following: at least one reference signal, at least one verification code, or at least one piece of service data. Correspondingly, the feedback result includes a measurement result of the at least one reference signal, a feedback code corresponding to the verification code, or indication information, and the indication information indicates whether the terminal device receives the service data. According to the method provided in this application, accuracy of verifying the location of the terminal device can be improved.

## Description

### CROSS-REFERENCE TO RELATED APPLICATIONS

This application claims priority to Chinese Patent Application No. 202210304227.X, filed with the China National Intellectual Property Administration on March 25, 2022 and entitled "METHOD FOR VERIFYING LOCATION OF TERMINAL DEVICE AND COMMUNICATION APPARATUS", which is incorporated herein by reference in its entirety.

### TECHNICAL FIELD

This application relates to the field of wireless communication technologies, and in particular, to a method for verifying a location of a terminal device and a communication apparatus.

### BACKGROUND

An access network device may verify location information reported by a terminal device. For example, the access network device may verify, based on one or more pieces of timing advance (time advance, TA) information reported by the terminal device, whether the location information reported by the terminal device is accurate.

In a non-terrestrial network (non-terrestrial network, NTN), the access network device is deployed on a non-terrestrial device like a high altitude platform or a satellite. Different locations of the terminal device relative to the non-terrestrial device correspond to different TAs. In the NTN network, because the terminal device reports the TA in a unit of slot, there may be an error, for example, an error of 1 ms, between the TA reported by the terminal device and an actual TA. Therefore, accuracy of verifying the location of the terminal device based on the TA information is low.

### SUMMARY

This application provides a method for verifying a location of a terminal device and a communication apparatus, to improve accuracy of verifying the location of the terminal device.

According to a first aspect, an embodiment of this application provides a method for verifying a location of a terminal device. The method may be performed by a first communication apparatus. The first communication apparatus may be a communication device or a communication apparatus, for example, a chip system, that can support the communication device in implementing a function needed in the method. For example, the first communication apparatus is an access network device, a chip disposed in the access network device, or another component configured to implement a function of the access network device. An example in which the communication device is a first access network device is used below for description. The method includes the following steps.

The first access network device receives first location information sent by the terminal device, and sends verification information to the terminal device. Then, the first access network device receives a feedback result sent by the terminal device, and verifies the first location information based on the feedback result. Alternatively, after receiving a feedback result sent by the terminal device, the first access network device sends the received feedback result and the first location information to a core network device. The verification information includes at least one of the following: at least one reference signal, at least one verification code, or at least one piece of service data. Correspondingly, the feedback result includes a measurement result of the at least one reference signal, a feedback code corresponding to the verification code, or indication information. The indication information indicates whether the terminal device receives the service data.

In this embodiment of this application, the verification information may be used to verify the location of the terminal device. For example, the first access network device sends the verification information to the terminal device, and the terminal device may send the feedback result of the verification information to the first access network device. The feedback result may indicate whether the terminal device receives a piece of verification information or some pieces of verification information. If the terminal device does not receive the verification information, the terminal device is not located in a coverage area of a beam used to send the verification information, so that the first access network device can determine the location of the terminal device based on the feedback result. According to the method provided in this embodiment of this application, the first access network device verifies, by sending the verification information to the terminal device, whether the location reported by the terminal device is reliable. For example, the first location information sent by the terminal device indicates that the terminal device is located in a first location area, but the first access network device determines, based on the feedback result, that the terminal device is located in a second location area. It may alternatively be considered that the feedback result indicates that the terminal device is located in the second location area. If there is no overlapping area between the first location area and the second location area, the first location information is unreliable. In comparison with verifying the location of the terminal device based on TA information, in this method, a delay in reporting the TA information by the terminal device can be avoided, so that location verification accuracy is higher. In addition, when determining that the first location information is unreliable, the first access network device may bar some services of the terminal device, to reduce an illegal service.

In a possible implementation, that the first access network device verifies the first location information based on the feedback result includes: The first access network device determines a location verification result based on the feedback result, where the location verification result indicates reliability of a location area (for example, the first location area) indicated by the first location information. The reliability of the location may be determined based on a requirement of positioning accuracy of the location. For example, if the first location information is unreliable provided that the first location area is not within a range of the second location area, the reliability indicated by the location verification result may be 0%. An actual location area of the terminal device, for example, the second location area, is allowed to overlap the first location area. In this case, if the first location area and the second location area overlap much, it may be considered that the first location information is reliable. For example, if 80% of the first location area overlaps the second location area, it may be considered that the first location information is reliable. In this case, there is no need to bar the service of the terminal device, to ensure normal running of a legal service as much as possible. That the reliability of the location indicates whether the location is reliable is more proper. This reduces the illegal service and ensures the normal running of the legal service as much as possible.

In a possible implementation, one reference signal corresponds to one beam, one verification code corresponds to one beam, and one piece of service data corresponds to one beam. That is, the first access network device sends the verification information to the terminal device over the beam. If the terminal device may obtain a reference signal, a verification code, or service data corresponding to one beam, it may be considered that the beam covers the terminal device, so that the location area of the terminal device can be determined.

In a possible implementation, a coverage area of a beam corresponding to a part of the verification information includes the location area indicated by the first location information. It may alternatively be understood as that, in a plurality of beams sent by the first access network device, only a part of the beams cover the terminal device, and a remaining part of the beams may not cover the terminal device. According to this solution, the terminal device can be prevented from falsely reporting the feedback result. For example, a coverage area of a beam corresponding to a reference signal whose number is 4 cannot cover the first location area reported by the terminal device. If the feedback result reported by the terminal device indicates that the reference signal whose number is 4 is measured, the first access network device may consider that the terminal device falsely reports the feedback result.

In a possible implementation, the beam covers different areas at different time. In other words, the coverage area of the beam is time-varying. For a same location area, different beams need to be used at different moments, so that reliability of verifying the location of the terminal device can be improved, and a probability of falsely reporting the feedback result by the terminal device can be reduced as much as possible.

In a possible implementation, the first access network device sends configuration information to the terminal device, where the configuration information indicates one or more of the following: a maximum quantity of reference signals sent by the first access network device, a maximum quantity of verification codes sent by the first access network device, or a maximum quantity of pieces of service data sent by the first access network device. A quantity of the at least one reference signal sent by the first access network device to the terminal device is less than or equal to the maximum quantity. A quantity of the at least one verification code sent by the first access network device to the terminal device is less than or equal to the maximum quantity. A quantity of the at least one piece of service data sent by the first access network device to the terminal device is less than or equal to the maximum quantity. In this solution, a quantity of pieces of verification information (beams) actually sent by the first access network device to the terminal device is less than a quantity of pieces of measurement and/or receiving verification information (beams) configured by the first access network device for the terminal device, to reduce resource overheads. For example, the first access network device configures the terminal device to measure eight beams, where three of the eight beams cover the terminal device, and the remaining five beams do not cover the terminal device. Because the five beams do not cover the terminal device, even if the first access network device sends the five beams, the terminal device cannot perform measurement. Therefore, the first access network device may send the three beams to the terminal device, to reduce the resource overheads.

In a possible implementation, the configuration information includes one or more of the following: measurement configuration information, reception configuration information, feedback indication information, or reporting configuration information. The measurement configuration information includes a configuration for measuring the at least one reference signal. The reception configuration information includes information indicating the maximum quantity of reference signals, the maximum quantity of verification codes, or the maximum quantity of pieces of service data sent by the first access network device. The feedback indication information includes a configuration indicating the terminal device to feed back the feedback result. The reporting configuration information includes one or more of the following: a reporting manner, a reporting threshold, and a reporting format, where the reporting manner includes periodic reporting or aperiodic reporting. The reporting format may alternatively be understood as reported content, or a form in which the reported content is implemented.

In a possible implementation, the method further includes: The first access network device determines the verification information and/or the configuration information based on the first location information. Alternatively, the first access network device determines the verification information and/or the configuration information based on the first location information and assistance information. The assistance information includes information about a reference signal that is of a current serving cell and that can be measured by the terminal device. When determining the verification information, the first access network device may refer to the first location information, to determine a proper beam as much as possible. For example, a proper quantity of beams are selected, and a beam in a proper direction is selected, to reduce the resource overheads as much as possible. Further, the first location information may be verified within a specific accuracy range. For example, a smaller area in the first location area of the terminal device may be determined by using the assistance information. In this way, a more proper beam may be determined, and the location of the terminal device is verified within a specific accuracy range.

In a possible implementation, the method further includes: The first access network device sends first indication information to the terminal device, where the first indication information indicates that the service of the terminal device is barred, and/or the first indication information indicates a reason for barring the service of the terminal device. When the location of the terminal device is unreliable, the first access network device may bar the service of the terminal device, that is, intercept the illegal service, to ensure network security as much as possible or meet a network supervision requirement. In addition, the first access network device may also notify the terminal device that the service of the terminal device is barred. Further, the first access network device may notify the terminal device of the reason for barring the service of the terminal device, to prevent the terminal device from performing the illegal service again.

In a possible implementation, the method further includes: The first access network device sends second indication information to the core network device, where the second indication information includes the location verification result. The first access network device may notify the core network device of the location verification result, and the core network device may determine, based on the location verification result, whether to bar the service of the terminal device. For example, if the location verification result indicates that the location area reported by the terminal device is unreliable, the core network device may bar the service of the terminal device, to reduce the illegal service and ensure the network security as much as possible.

In a possible implementation, the second indication information further indicates one or more of the following: requesting to disconnect the terminal device, requesting to switch a core network device of the terminal device, a reason for initiating the request, or requesting to locate the terminal device. When finding that the location area of the terminal device is unreliable, the first access network device may request the core network device to release the terminal device, for example, request to disconnect the terminal device, or request to switch a core network device of the terminal device, to intercept the illegal service.

In a possible implementation, the method further includes: The first access network device sends first location verification information to the core network device, where the first location verification information includes the first location information and the feedback result. In other words, the first access network device notifies the core network device of the verification information and the feedback result, and the core network device verifies the first location information. When determining that the first location information is unreliable, the core network device may also bar the service of the terminal device, to reduce the illegal service as much as possible. In addition, the core network verifies the first location information, so that privacy of the terminal device can be further protected.

In a possible implementation, the method further includes: The first access network device receives third indication information sent by the core network device, where the third indication information includes the location verification result, and the location verification result indicates the reliability of the location area indicated by the first location information. After determining the reliability of the location area indicated by the first location information, the core network device may notify the first access network device, so that the first access network device may release the terminal device, to reduce the illegal service.

According to a second aspect, an embodiment of this application provides a method for verifying a location of a terminal device. The method may be performed by a second communication apparatus. The second communication apparatus may be a communication device or a communication apparatus, for example, a chip system, that can support the communication device in implementing a function needed in the method. For example, the second communication apparatus is a terminal device, a chip disposed in the terminal device, or another component configured to implement a function of the terminal device. An example in which the communication device is the terminal device is used below for description. The method includes the following steps.

The terminal device sends first location information to a first access network device, receives verification information sent by the first access network device, and sends a feedback result to the first access network device. The verification information includes one or more of the following: at least one reference signal, at least one verification code, or at least one piece of service data. The feedback result includes a measurement result of the at least one reference signal, a feedback code corresponding to the verification code, or indication information, and the indication information indicates whether the terminal device receives the service data.

In a possible implementation, one reference signal corresponds to one beam, one verification code corresponds to one beam, and one piece of service data corresponds to one beam.

In a possible implementation, a coverage area of a beam corresponding to a part of the verification information includes a location area indicated by the first location information.

In a possible implementation, the beam covers different areas at different time.

In a possible implementation, the method further includes: The terminal device receives configuration information sent by the first access network device, where the configuration information indicates one or more of the following: a maximum quantity of reference signals sent by the first access network device, a maximum quantity of verification codes sent by the first access network device, or a maximum quantity of pieces of service data sent by the first access network device. A quantity of the at least one reference signal sent by the first access network device to the terminal device is less than or equal to the maximum quantity. A quantity of the at least one verification code sent by the first access network device to the terminal device is less than or equal to the maximum quantity. A quantity of the at least one piece of service data sent by the first access network device to the terminal device is less than or equal to the maximum quantity.

In a possible implementation, the configuration information includes one or more of the following: measurement configuration information, reception configuration information, feedback indication information, or reporting configuration information. The measurement configuration information includes a configuration for measuring the at least one reference signal. The reception configuration information includes information indicating the maximum quantity of reference signals, the maximum quantity of verification codes, or the maximum quantity of pieces of service data sent by the first access network device. The feedback indication information includes a configuration indicating the terminal device to feed back the feedback result. The reporting configuration information includes one or more of the following: a reporting manner, a reporting threshold, and a reporting format, where the reporting manner includes periodic reporting or aperiodic reporting. The reporting format may alternatively be understood as reported content, or a form in which the reported content is implemented.

In a possible implementation, the method further includes: The terminal device receives first indication information sent by the first access network device. The first indication information indicates that a service of the terminal device is barred, and/or the first indication information indicates a reason for barring the service of the terminal device.

For technical effects brought by the second aspect and the possible implementations of the second aspect, refer to descriptions of technical effects of the first aspect and the possible implementations of the first aspect.

According to a third aspect, an embodiment of this application provides a method for verifying a location of a terminal device. The method may be performed by a third communication apparatus. The third communication apparatus may be a communication device or a communication apparatus, for example, a chip system, that can support the communication device in implementing a function needed in the method. For example, the third communication apparatus is a core network device, a chip disposed in the core network device, or another component configured to implement a function of the core network device. An example in which the communication device is the core network device is used below for description. The method includes the following steps.

The core network device receives first location verification information sent by a first access network device, and verifies first location information based on a feedback result. The first location verification information includes the first location information of the terminal device and the feedback result of the terminal device for verification information sent by the first access network device. The verification information includes one or more of the following: at least one reference signal, at least one verification code, or at least one piece of service data. The feedback result includes a measurement result of the at least one reference signal, a feedback code corresponding to the verification code, or indication information, and the indication information indicates whether the terminal device receives the service data.

In a possible implementation, one reference signal corresponds to one beam, one verification code corresponds to one beam, and one piece of service data corresponds to one beam.

In a possible implementation, the first location verification information further includes one or more of the following: the verification information, configuration information of the verification information, configuration information of a beam corresponding to the verification information, coverage range information of the beam corresponding to the verification information, at least one piece of TA information of the terminal device, satellite location information corresponding to the at least one piece of TA information, time information corresponding to the at least one piece of TA information, ephemeris information corresponding to the at least one piece of TA information, or cell information corresponding to the at least one piece of TA information. The verification information and/or the configuration information is further determined based on assistance information, and the assistance information includes information about a reference signal that is of a current serving cell and that can be currently measured by the terminal device. The coverage range information indicates coverage areas of the beam at different time.

In a possible implementation, the method further includes: The core network device sends first indication information to the first access network device. The first indication information includes a location verification result, and the location verification result indicates reliability of a location area indicated by the first location information.

In a possible implementation, the first indication information further indicates one or more of the following: requesting to disconnect the terminal device, requesting to switch a core network device of the terminal device, a reason for initiating the request, or requesting to locate the terminal device.

For technical effects brought by the third aspect and the possible implementations of the third aspect, refer to descriptions of technical effects of the first aspect and the possible implementations of the first aspect.

According to a fourth aspect, an embodiment of this application provides a method for verifying a location of a terminal device. The method may be performed by a first communication apparatus. The first communication apparatus may be a communication device or a communication apparatus, for example, a chip system, that can support the communication device in implementing a function needed in the method. For example, the first communication apparatus is a first access network device, a chip disposed in the first access network device, or another component configured to implement a function of the access network device. An example in which the communication device is the first access network device is used below for description. The method includes the following steps.

The first access network device determines second location verification information, and sends the second location verification information to a second access network device. The second location verification information includes TA information used by the first access network device to determine the location of the terminal device. This embodiment of this application is applicable to a scenario in which the terminal device switches from the first access network device to the second access network device. The second access network device may be considered as a serving base station of the terminal device, and the first access network device is a base station that serves the terminal device before the second access network device. It may be understood that, when the terminal device just accesses the second access network device, the second access network device can obtain a plurality of pieces of TA information of the terminal device only after a period of time, and it takes long time to verify the location of the terminal device. According to the solution in this embodiment of this application, the first access network device may notify the second access network device of historical TA information of the terminal device. In this way, the second access network device can obtain, without waiting for long time, the TA information that can be used to verify the location of the terminal device. Therefore, a delay in verifying the terminal device can be reduced. Therefore, an illegal service that occurs after the terminal device switches to the second access network device can be barred in a timely manner.

In a possible implementation, the second location verification information further includes a location verification result and second location information. The location verification result is a verification result of the first access network device for location information sent by the terminal device. The second location information indicates a location area that is of the terminal device and that is determined by the first access network device. In this solution, the first access network device may indicate, by using the location verification result, whether the determined location area of the terminal device is reliable. For example, if the location verification result indicates that the location of the terminal device is reliable, the second access network device may determine that the location reported by the terminal device is reliable.

In a possible implementation, the second location verification information further includes one or more of the following: at least one piece of TA information of the terminal device, satellite location information corresponding to the at least one piece of TA information, time information corresponding to the at least one piece of TA information, ephemeris information corresponding to the at least one piece of TA information, cell information corresponding to the at least one piece of TA information, verification information, configuration information of a beam corresponding to the verification information, coverage range information of the beam corresponding to the verification information, configuration information, or a feedback result. The verification information includes at least one reference signal, at least one verification code, or at least one piece of service data. The coverage range information indicates coverage areas of the beam at different time. The feedback result includes a measurement result of the at least one reference signal, a feedback code corresponding to the verification code, or indication information, and the indication information indicates whether the terminal device receives the service data.

In a possible implementation, the second location verification information is carried in a switching request message sent by the first access network device to the second access network device. The switching request message is used to request the second access network device to prepare a resource for the switching. This embodiment of this application is applicable to a scenario in which the terminal device switches between serving base stations. The switching request message sent by the first access network device to the second access network device is reused to carry the second location verification information, so that signaling overheads can be reduced as much as possible.

**According to a fifth aspect,** an embodiment of this application provides a method for verifying a location of a terminal device. The method may be performed by a second communication apparatus. The second communication apparatus may be a communication device or a communication apparatus, for example, a chip system, that can support the communication device in implementing a function needed in the method. For example, the second communication apparatus is a second access network device, a chip disposed in the terminal device, or another component configured to implement a function of the second access network device. An example in which the communication device is the second access network device is used below for description. The method includes the following steps.

The second access network device receives second location verification information sent by a first access network device, and verifies the location of the terminal device based on the second location verification information. The second location verification information includes TA information used by the first access network device to determine the location of the terminal device.

In a possible implementation, the second location verification information includes a location verification result and second location information. The location verification result is a verification result of the first access network device for location information sent by the terminal device. The second location information indicates a location area that is of the terminal device and that is determined by the first access network device.

In a possible implementation, the second location verification information further includes one or more of the following: at least one piece of TA information of the terminal device, satellite location information corresponding to the at least one piece of TA information, time information corresponding to the at least one piece of TA information, ephemeris information corresponding to the at least one piece of TA information, cell information corresponding to the at least one piece of TA information, verification information, configuration information of a beam corresponding to the verification information, coverage range information of the beam corresponding to the verification information, configuration information, or a feedback result. The verification information includes at least one reference signal, at least one verification code, or at least one piece of service data. The coverage range information indicates coverage areas of the beam at different time. The feedback result includes a measurement result of the at least one reference signal, a feedback code corresponding to the verification code, or indication information, and the indication information indicates whether the terminal device receives the service data.

In a possible implementation, the second location verification information is carried in a switching request message sent by the first access network device to the second access network device. The switching request message is used to request the second access network device to prepare a resource for switching.

For technical effects brought by the fifth aspect and the possible implementations of the fifth aspect, refer to descriptions of technical effects of the fourth aspect and the possible implementations of the fourth aspect.

According to a sixth aspect, an embodiment of this application provides a communication apparatus. The communication apparatus has a function of implementing behavior in the method embodiment of one or more of the first aspect to the fifth aspect. For beneficial effects, refer to descriptions of the first aspect to the fifth aspect. Details are not described herein again. The communication apparatus may be the terminal device in the first aspect to the fifth aspect, or the communication apparatus may be an apparatus, for example, a chip or a chip system, that can implement the method provided in at least one of the first aspect to the fifth aspect.

In a possible design, the communication apparatus includes a corresponding means (means) or module configured to perform the method in at least one of the first aspect to the fifth aspect. For example, the communication apparatus includes a processing unit (also referred to as a processing module or a processor sometimes) and/or a transceiver unit (also referred to as a transceiver module or a transceiver sometimes). These units (modules) may perform corresponding functions in the method example in at least one of the first aspect to the fifth aspect. For details, refer to detailed descriptions in the method example. Details are not described herein again.

According to a seventh aspect, an embodiment of this application provides a communication apparatus. The communication apparatus may be the communication apparatus in at least one of the first aspect to the fifth aspect in the foregoing embodiments, or a chip or a chip system disposed in the communication apparatus in at least one of the first aspect to the fifth aspect. The communication apparatus includes a communication interface and a processor, and optionally, further includes a memory. The memory is configured to store a computer program. The processor is coupled to the memory and the communication interface. When the processor reads the computer program or instructions, the communication apparatus is enabled to perform the method performed by the terminal device, the first access network device, the second access network device, or the core network device in the foregoing method embodiments.

According to an eighth aspect, an embodiment of this application provides a communication apparatus. The communication apparatus includes an input/output interface and a logic circuit. The input/output interface is configured to input and/or output information. The logic circuit is configured to perform the method in at least one of the first aspect to the fifth aspect.

According to a ninth aspect, an embodiment of this application provides a chip system. The chip system includes a processor, and may further include a memory and/or a communication interface, configured to implement the method in one or more of the first aspect to the fifth aspect. In a possible implementation, the chip system further includes the memory, configured to store a computer program. The chip system may include a chip, or may include a chip and another discrete device.

According to a tenth aspect, an embodiment of this application provides a communication system. The communication system includes a first access network device and a terminal device. The first access network device is configured to perform the method performed by the first access network device in the first aspect. The terminal device is configured to perform the method performed by the terminal device in the second aspect. Alternatively, the communication system includes a first access network device, a terminal device, and a core network device. The first access network device is configured to perform the method performed by the first access network device in the first aspect. The terminal device is configured to perform the method performed by the terminal device in the second aspect. The core network device is configured to perform the method performed by the core network device in the third aspect. Alternatively, the communication system includes a first access network device and a second access network device. The first access network device is configured to perform the method performed by the first access network device in the fourth aspect. The second access network device is configured to perform the method performed by the second access network device in the fifth aspect.

According to an eleventh aspect, this application provides a computer-readable storage medium. The computer-readable storage medium stores a computer program. When the computer program is run, the method in one or more of the first aspect to the fifth aspect is implemented.

According to a twelfth aspect, a computer program product is provided. The computer program product includes computer program code. When the computer program code is run, the method in one or more of the first aspect to the fifth aspect is performed.

For beneficial effects of the sixth aspect to the twelfth aspect and the implementations of the sixth aspect to the twelfth aspect, refer to descriptions of beneficial effects of the first aspect to the fifth aspect and the implementations of the first aspect to the fifth aspect.

### BRIEF DESCRIPTION OF DRAWINGS

FIG. 1 is a diagram of determining a location of a terminal device based on TA information;
FIG. 2 is a diagram of a location estimation error caused by an error between a TA reported by a terminal device and an actual TA of the terminal device;
FIG. 3 is a diagram of a location estimation error in locating a terminal device based on a TA;
FIG. 4 is a diagram of an NTN network (transparent mode) architecture;
FIG. 5 is a diagram of an NTN network (regenerative mode) architecture;
FIG. 6 is a diagram of an NTN network (having an ISL) architecture;
FIG. 7 is a diagram of an NTN network (a network device includes a DU and a CU) architecture;
FIG. 8 is a schematic flowchart of a first method for verifying a location of a terminal device according to an embodiment of this application;
FIG. 9 is a schematic flowchart of a second method for verifying a location of a terminal device according to an embodiment of this application;
FIG. 10 is a schematic flowchart of a third method for verifying a location of a terminal device according to an embodiment of this application;
FIG. 11 is a diagram of a structure of a communication apparatus according to an embodiment of this application; and
FIG. 12 is a diagram of another structure of a communication apparatus according to an embodiment of this application.

### DESCRIPTION OF EMBODIMENTS

To help a person skilled in the art understand technical solutions provided in embodiments of this application, some terms in embodiments of this application are first described.

In embodiments of this application, a network device is an access device through which a terminal device accesses a mobile communication system in a wireless manner, and includes, for example, an access network (access network, AN) device, for example, a base station. Alternatively, the network device may be a device that communicates with the terminal device over an air interface. The network device may include an evolved NodeB (evolved NodeB) (also referred to as an eNB or an e-NodeB for short) in an LTE system or a long term evolution-advanced (long term evolution-advanced, LTE-A) system. The network device may alternatively include a next generation NodeB (next generation NodeB, gNB) in a 5G NR system. The network device may alternatively include an access node or the like in a wireless-fidelity (wireless-fidelity, Wi-Fi) system. The network device may alternatively be a relay station, a vehicle-mounted device, a future evolved public land mobile network (Public Land Mobile Network, PLMN) device, a device in a D2D network, a device in a machine-to-machine (machine to machine, M2M) network, a device in an internet of things (internet of things, IoT) network, a network device in a PLMN network, or the like. A specific technology and a specific device form that are used by the network device are not limited in embodiments of this application.

In addition, the base station in embodiments of this application may include a central unit (central unit, CU) and a distributed unit (distributed unit, DU), and a plurality of DUs may be centrally controlled by one CU. The CU and the DU may be divided based on a protocol layer function that the CU and the DU each have in a wireless network. For example, functions of a packet data convergence protocol (packet data convergence protocol, PDCP) layer and a protocol layer above the packet data convergence protocol layer are set on the CU, and functions of protocol layers below the PDCP layer, for example, a radio link control (radio link control, RLC) layer and a medium access control (medium access control, MAC) layer, are set on the DU. It should be noted that division into the protocol layers is merely an example, and there may be other division of protocol layers. A radio frequency apparatus may not be disposed in the DU but is disposed remotely from the DU, or may be integrated into the DU, or a part of the radio frequency apparatus is disposed remotely from the DU and a remaining part is integrated into the DU. This is not limited in embodiments of this application. In addition, in some embodiments, a control plane (control plane, CP) and a user plane (user plane, UP) of the CU may be further separated into different entities for implementation, where the entities are respectively a control-plane CU entity (CU-CP entity) and a user-plane CU entity (CU-UP entity). In the network architecture, signaling generated by the CU may be sent to the terminal device through the DU, or signaling generated by UE may be sent to the CU through the DU. The DU may transparently transmit the signaling to the UE or the CU by directly encapsulating the signaling at a protocol layer without parsing the signaling. In the network architecture, the CU is classified as a network device on a radio access network (radio access network, RAN) side. In addition, the CU may alternatively be classified as a network device on a core network (core network, CN) side. This is not limited in this application.

Alternatively, the access network device may be a server or the like. For example, a network device in a vehicle-to-everything (vehicle to everything, V2X) technology may be a road side unit (road side unit, RSU). An example in which the access network device is the base station is used below for description. The base station may communicate with the terminal device, or may communicate with the terminal device through a relay station. The terminal device may communicate with a plurality of base stations in different access technologies.

In embodiments of this application, a core network device is configured to implement functions such as mobility management, data processing, session management, and policy and charging. Names of devices implementing a core network function in systems using different access technologies may be different. This is not limited in embodiments of this application. A 5G system is used as an example. The core network device includes an access and mobility management function (access and mobility management function, AMF), a session management function (session management function, SMF), a policy control function (policy control function, PCF), a user plane function (user plane function, UPF), or the like.

In embodiments of this application, the terminal device is a device with a wireless transceiver function, and may send a signal to the network device, or receive a signal from the network device. The terminal device may include user equipment (user equipment, UE), and is also referred to as a terminal, an access station, a UE station, a remote station, a wireless communication device, a user apparatus, or the like sometimes. The terminal device is configured to connect a person, an object, a machine, and the like, may be widely used in various scenarios, and includes, for example, but not limited to terminal devices in the following scenarios: cellular communication, D2D, V2X, machine-to-machine/machine-type communication (machine-to-machine/machine-type communication, M2M/MTC), internet of things (internet of things, IoT), virtual reality (virtual reality, VR), augmented reality (augmented reality, AR), industrial control (industrial control), self-driving (self-driving), remote medical (remote medical), a smart grid (smart grid), smart furniture, smart office, smart wearable, smart transportation, a smart city (smart city), an uncrewed aerial vehicle, and a robot. For example, the terminal device may be a mobile phone (mobile phone), a pad (Pad), a computer with a wireless transceiver function, a VR terminal, an AR terminal, a wireless terminal in the industrial control, a wireless terminal in the self-driving, a smart speaker in an IoT network, a wireless terminal device in the remote medical, a wireless terminal device in the smart grid, a wireless terminal device in transportation security, a wireless terminal device in the smart city, or a wireless terminal device in a smart home. By way of example and not limitation, in embodiments of this application, the terminal device may alternatively be a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes. If the various terminal devices described above are located in a vehicle (for example, placed in the vehicle or installed in the vehicle), the terminal devices may be all considered as vehicle-mounted terminal devices. For example, the vehicle-mounted terminal device is also referred to as an on-board unit (on-board unit, OBU). The terminal device in this application may alternatively be a vehicle-mounted module, a vehicle-mounted component, a vehicle-mounted chip, or an on-board unit that is built in the vehicle as one or more components or units. The vehicle may implement a method in this application through the built-in vehicle-mounted module, vehicle-mounted component, vehicle-mounted chip, or on-board unit.

In embodiments of this application, a communication apparatus configured to implement a function of the network device may be a network device, or may be an apparatus, for example, a chip system, that can support the network device in implementing the function. The apparatus may be installed in the network device. In the technical solutions provided in embodiments of this application, an example in which the apparatus configured to implement the function of the network device is the network device is used to describe the technical solutions provided in embodiments of this application.

In embodiments of this application, unless otherwise specified, a quantity of nouns indicates "a singular noun or a plural noun", that is, "one or more". "At least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. The character "/" usually indicates an "or" relationship between the associated objects. For example, A/B indicates A or B. "At least one of the following items (pieces)" or a similar expression thereof indicates any combination of these items, including a single item (piece) or any combination of a plurality of items (pieces). For example, at least one of a, b, or c indicates a, b, c, a and b, a and c, b and c, or a, b, and c, where a, b, and c may be singular or plural.

Ordinal numbers such as "first" and "second" mentioned in embodiments of this application are used to distinguish between a plurality of objects, but are not used to limit sizes, content, sequences, time sequences, priorities, importance, or the like of the plurality of objects. For example, first location information and second location information may be same location information, or may be different location information. In addition, such names do not indicate a difference between locations, priorities, importance, or the like indicated by the two pieces of location information.

The foregoing briefly describes the technical terms in embodiments of this application. The following describes related technical solutions in embodiments of this application.

In a possible scenario, a terminal device reports a location of the terminal device to an access network device. The access network device may verify the location reported by the terminal device, to perform corresponding behavior based on a determined result. For example, the location reported by the terminal device to the access network device is a first location area. However, the terminal device is actually located in a second location area. It is assumed that a first service is illegal in the second location area, and the first service is legal in the first location area. If the access network device does not verify the location reported by the terminal device, and considers by default that the location reported by the terminal device is accurate, the access network device allows the first service even if the terminal device is actually located in the second location area. This causes problems of network insecurity and network non-compliance.

Therefore, in some application scenarios, the location of the terminal device needs to be verified. For example, in scenarios such as emergency call routing, public land mobile network (public land mobile network, PLMN) selection, and regional service restriction, the location of the terminal device needs to be verified. Verifying the location of the terminal device based on TA information is proposed. For example, the access network device may verify the location of the terminal device based on one or more pieces of TA information reported by the terminal device.

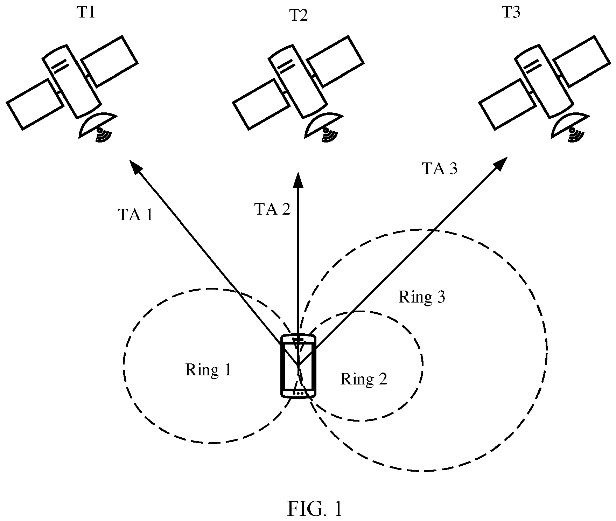

For example, FIG. 1 is a diagram of determining a location of a terminal device based on TA information. FIG. 1 includes the terminal device and a satellite. Different locations of the terminal device relative to the satellite indicate different TAs of the terminal device. For example, at a moment T 1, the TA of the terminal device is a TA 1. At a moment T2, the TA of the terminal device is a TA 2. At a moment T3, the TA of the terminal device is a TA 3. It can be learned from FIG. 1 that the access network device may determine a ring 1 based on the TA 1. Similarly, the access network device may determine a ring 2 based on the TA 2, and determine a ring 3 based on the TA 3. The location of the terminal device is an intersecting point of the ring 1, the ring 2, and the ring 3.

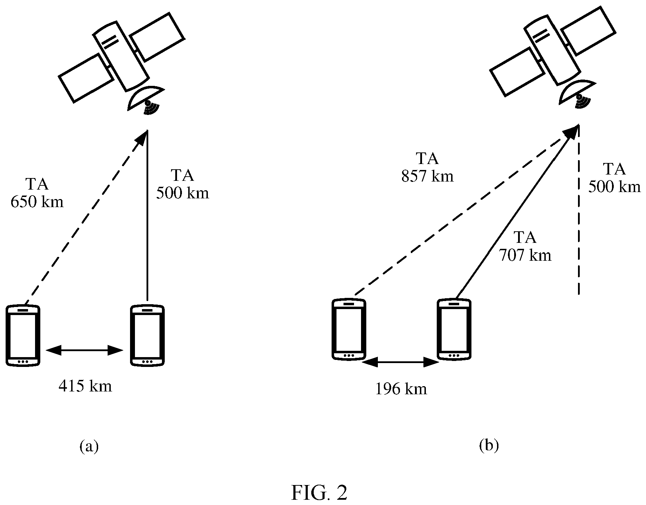

Because the terminal device reports the TAin a unit of slot, there is an error, for example, an error of 1 ms, between the TA reported by the terminal device and an actual TA. Therefore, there is also an error in determining the location of the terminal device by the access network device. For example, FIG. 2 is a diagram of a location estimation error caused by an error between a TA reported by a terminal device and an actual TA of the terminal device. In FIG. 2, an example in which a satellite is right above the terminal device is used. As shown in FIG. 2, it is assumed that an actual TA of the terminal device indicates that the terminal device is 500 km away from the satellite. Because there is an error of 1 ms in the TAreported by the terminal device, the TAreported by the terminal device indicates that the terminal device is 500 km+(3 × 10⁸) m/s×1 ms/2=650 km away from the satellite. As shown in (a) in FIG. 2, there is an error of 415 km between a location that is of the terminal device and that is determined by the access network device based on the TA and an actual location of the terminal device. It may be understood that different locations of the terminal device relative to the satellite indicate different location estimation errors caused by errors between TAs reported by the terminal device and actual TAs of the terminal device. As shown in (b) in FIG. 2, the terminal device deviates by 45° from right below the satellite, an actual TA of the terminal device indicates that the terminal device is 707 km away from the satellite, and a TA reported by the terminal device indicates that the terminal device is 857 km away from the satellite. In this case, there is an error of 196 km between a location of the terminal device and an actual location of the terminal device. It should be noted that distances between the terminal device and the satellite in FIG. 2 are merely examples.

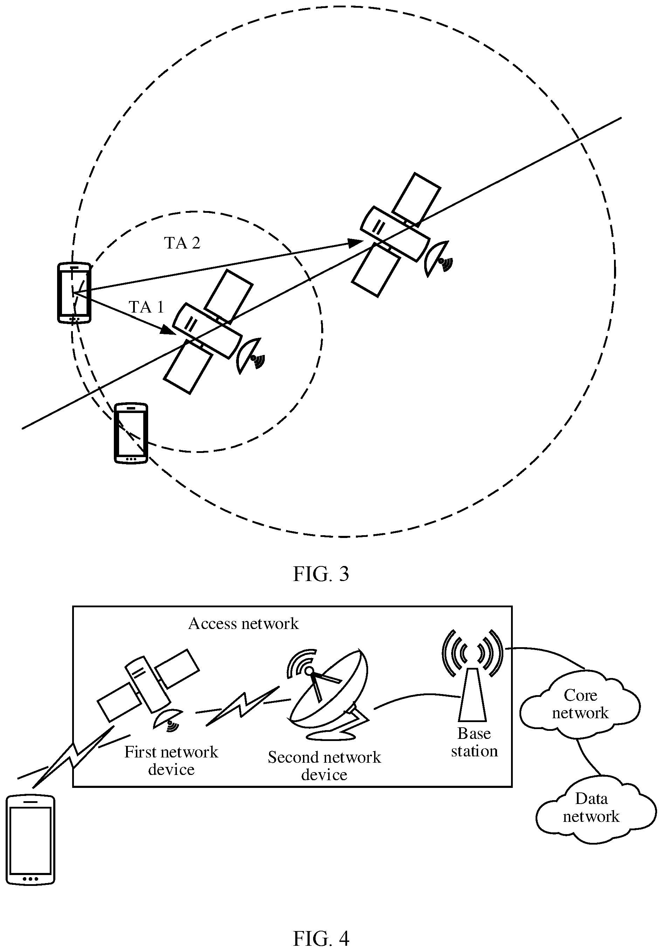

In addition to the location estimation error caused by the TA reporting error, a moving trajectory of the satellite also introduces an additional location estimation error. For ease of understanding, FIG. 3 is a diagram of a location estimation error in locating a terminal device based on a TA when a satellite orbit is not right above the terminal device. In FIG. 3, an example in which a TA reported by the terminal device is the same as an actual TA of the terminal is used, that is, there is no TA error. In FIG. 3, a TA 1 is an actual TA of the terminal device at a moment 1, and a TA 2 is an actual TA of the terminal device at a moment 2. The access network device determines, based on the TA 1, that the terminal device is located on a ring 1, and determines, based on the TA 2, that the terminal device is located on a ring 2. Because a moving trajectory of the terminal device does not coincide with that of the satellite, there are two intersecting points of the ring 1 and the ring 2 instead of one. Therefore, an intersecting point that is in the two intersecting points and at which UE is located cannot be determined. It can be learned that an error in verifying the location of the terminal device based on the TA is large.

In view of this, the solutions in embodiments of this application are provided. In embodiments of this application, the access network device may send verification information to the terminal device over a beam. If the terminal device receives and/or measures the verification information, it may be considered that the terminal device is located in a coverage range of a beam corresponding to the verification information. Therefore, the terminal device may notify the access network device of the received or measured verification information, so that the access network device may determine a location range of the terminal device based on a feedback result of the terminal device. In comparison with determining the location range of the terminal device based on TA information, according to the method provided in embodiments of this application, verification accuracy of the terminal device can be improved. In other words, the location of the terminal device can be verified more accurately.

The technical solutions provided in embodiments of this application may be applied to a 4th generation (the 4th generation, 4G) mobile communication technology system, a 5G system, an NTN system, vehicle to everything (vehicle to everything, V2X), long term evolution-vehicle (LTE-vehicle, LTE-V), vehicle to vehicle (vehicle to vehicle, V2V), internet of vehicles, machine type communication (Machine Type Communication, MTC), internet of things (internet of things, IoT), long term evolution-machine to machine (LTE-machine to machine, LTE-M), machine to machine (machine to machine, M2M), internet of things, or a future mobile communication system.

In a possible application scenario, the NTN system may include a satellite system. Satellite systems may be classified into a highly elliptical orbit (highly elliptical orbit, HEO) satellite, a GEO satellite, a medium earth orbit (medium earth orbit, MEO) satellite, and a low-earth orbit (low-earth orbit, LEO) satellite based on a satellite altitude, that is, a satellite orbit altitude. In addition, the NTN system may further include an air network device like a high altitude platform station (high altitude platform station, HAPS) communication system. The air network device in this application is not limited to the foregoing examples.

In an example, FIG. 4 is a diagram of an NTN network architecture. The NTN network includes a first network device, a second network device, a terrestrial base station, a terrestrial core network, and a terminal. The first network device may be a satellite, for example, may be an HEO satellite, a GEO satellite, an MEO satellite, an LEO satellite, or an HAPS. This is not limited herein. The second network device may be a gateway (gateway) (or referred to as a terrestrial station, an earth station, or a gateway station), and may be configured to connect the first network device to the base station. One or more first network devices may be connected to one or more terrestrial base stations through one or more second network devices. This is not limited herein. In FIG. 4, a communication mode of the first network device is a transparent (transparent) mode. To be specific, the first network device serves as an analog radio frequency repeater to implement radio frequency conversion and amplification, and may perform transparent transmission of or copy a signal between the base station and the terminal. For example, a signal sent by the terminal may be transparently transmitted by the first network device, and forwarded by the second network device, to the terrestrial base station.

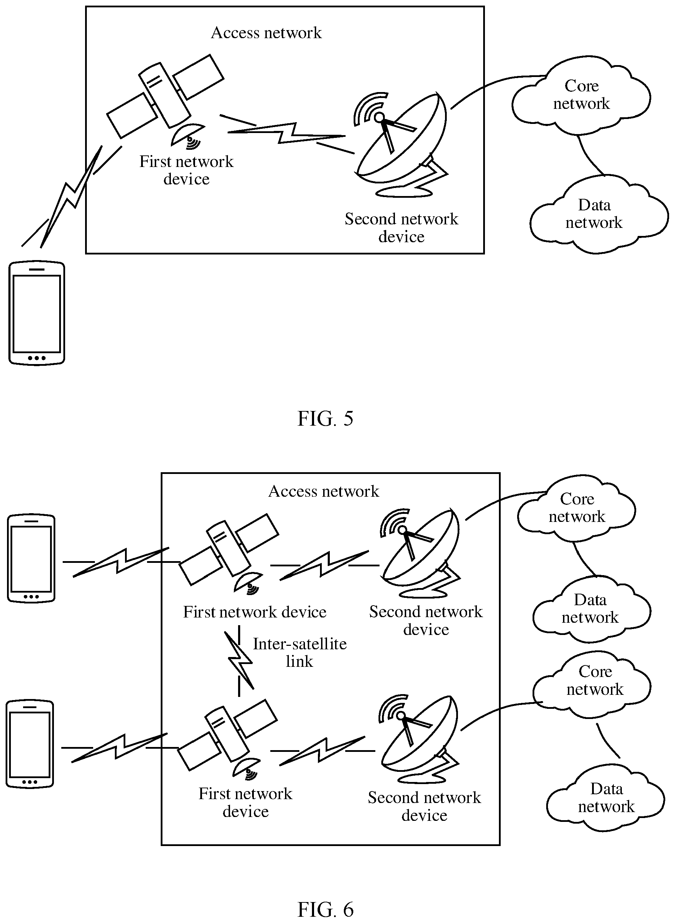

The communication mode of the first network device is not limited in this embodiment of this application. For example, the communication mode of the first network device may alternatively be a regenerative (regenerative) mode. FIG. 5 is a diagram of another NTN network architecture. In FIG. 5, a communication mode of a first network device is a regenerative mode. To be specific, the first network device may serve as a base station for wireless communication to regenerate signals received from the ground, and may understand and process these signals. For example, the first network device may be a base station carried on an artificial earth satellite or a high-altitude aircraft. For example, the base station may be an evolved NodeB (eNB) or a 5G base station (gNB). A second network device may forward signaling between the first network device (that is, the base station) and a core network.

It should be noted that FIG. 5 shows only one first network device and one second network device. In actual use, an architecture with a plurality of first network devices and/or a plurality of second network devices may be used based on a need. Each first network device may provide a service for one or more terminals, each second network device may correspond to one or more first network devices, and each first network device may correspond to one or more second network devices. This is not specifically limited in this embodiment of this application.

In an example, FIG. 6 is a diagram of another NTN network architecture. In FIG. 6, an example in which two first network devices and two second network devices are included is used. Communication modes of the two first network devices are regenerative modes. To be specific, the two first network devices may serve as base stations for wireless communication. A difference from FIG. 5 lies in that there is an inter-satellite link (inter-satellite link, ISL) between the two first network devices. In this network architecture, different first network devices may communicate with each other, and may be connected to a same terrestrial core network.

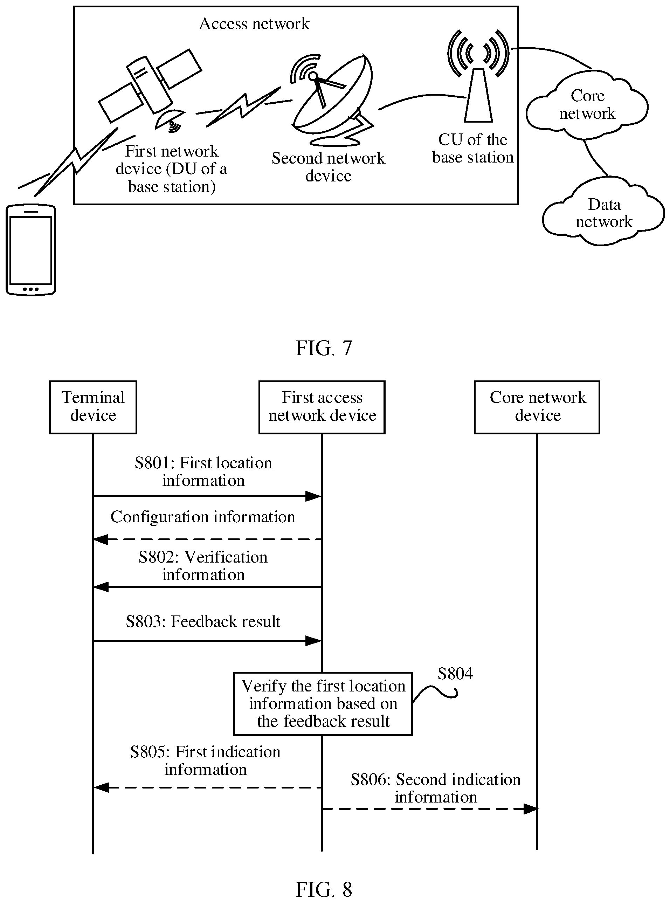

In an example, the first network device may alternatively serve as a DU of a base station, and is separated from a CU of a terrestrial base station, to form a CU-DU distributed architecture. For example, FIG. 7 is a diagram of another NTN network architecture. A difference between FIG. 7 and FIG. 4 lies in that, as a DU of a base station, a first network device may understand, process, and regenerate a signal from the ground instead of only performing transparent transmission or copying, and a terrestrial base station serves only as a CU. In this network architecture, a serving link between a terminal device and the first network device may be used for transmission of an NR-Uu radio interface signal, a feeder link between the first network device and a second network device is used for transmission of a satellite radio interface (satellite radio interface, SRI) signal, and transmission of an F1 interface signal between the DU and the CU is performed on the SRI signal.

With reference to the accompanying drawings, the following describes in detail a method for verifying a location of a terminal device provided in embodiments of this application. In the following description process, the method may be applied to any communication system shown in FIG. 4 to FIG. 7. In embodiments of this application, an access network device may verify the location of the terminal device, or a core network device may verify the location of the terminal device. The access network device may be, for example, the first network device and/or the terrestrial base station in FIG. 4 to FIG. 7. It should be noted that the communication systems shown in FIG. 4 to FIG. 7 are merely used as examples in embodiments of this application, and embodiments of this application are not limited to the scenarios. A reference signal in this specification may be a channel state information reference signal (channel state information reference signal, CSI-RS), may be a synchronization signal and physical broadcast channel (physical broadcast channel, PBCH) block (synchronization signal and PBCH block, SSB), or may be another reference signal sent over a beam. This is not limited herein.

FIG. 8 is a schematic flowchart of a first method for verifying a location of a terminal device according to an embodiment of this application.

S801: The terminal device sends first location information to a first access network device.

The terminal device may report the location of the terminal device to the first access network device. For example, the terminal device sends the first location information to the first access network device, where the first location information may indicate that the terminal device is located in a first location area. Correspondingly, the first access network device receives the first location information sent by the terminal device, and may determine, based on the first location information, that the terminal device is located in the first location area. For example, the first location information may include global positioning system (global positioning system, GPS) coordinates of the first location area. Alternatively, the first location information may include an address of a street in which the first location area is located, and the like. A specific type of information included in the first location information is not limited in this embodiment of this application, provided that the first location area can be indicated.

That the first location area reported by the terminal device may be different from an actual location area of the terminal device is considered. For example, the terminal device is actually located in a second location area, but notifies the first access network device that the terminal device is located in the first location area. In this case, the terminal device may be considered as a malicious terminal. To avoid an illegal service of the malicious terminal, the first access network device may verify the first location information reported by the terminal device, in other words, verify whether the location area reported by the terminal device is reliable. A definition of the reliability is specifically described below, and is not described herein.

S802: The first access network device sends verification information to the terminal device.

The verification information may be used to verify whether the first location information is reliable. In this embodiment of this application, the first access network device may send the verification information over a beam. There is a correspondence between the verification information and the beam. If the terminal device can receive the verification information, it may be considered that the terminal device is located in a coverage range of the beam corresponding to the received verification information. The terminal device feeds back, to the first access network device, beam information corresponding to the measured or received verification information, for example, a beam ID and/or beam strength. The first access network device may verify, based on the beam information fed back by the terminal device, whether the location area reported by the terminal device is reliable.

The verification information has a plurality of specific implementation forms. For example, the verification information may be a reference signal, may be a verification code, or may be service data. Alternatively, the verification information may include at least two of a reference signal, a verification code, and service data. For example, the verification information may include one or more of the following: at least one reference signal, at least one verification code, or at least one piece of service data. One piece of verification information may correspond to one beam. For example, one reference signal corresponds to one beam, one verification code corresponds to one beam, and one piece of service data corresponds to one beam. Alternatively, one beam may correspond to a plurality of pieces of verification information. For example, one beam may correspond to a plurality of verification codes. Alternatively, one piece of verification information may correspond to a plurality of beams. For example, one reference signal corresponds to two beams.

The first access network device receives the first location information, and may determine beam configuration information based on the first location information. The beam configuration information includes a beam configuration used by the first access network device to send the verification information, for example, a quantity of transmit beams, a size of the beam, a location of the beam, transmit strength of the beam, and a shape of the beam. It should be noted that the beam configuration information is used by the first access network device, and is not sent to the terminal device.

It may be understood that, if the first access network device sends a small quantity of beams, a small quantity of beams cover the terminal device, and accuracy of verifying the location of the terminal device may not be ensured. For example, the accuracy of verifying the location of the terminal device requires that a street area in which the terminal device is located can be verified. If the first access network device sends one beam, an area covered by the beam is an administrative area, and it is clear that the location of the terminal device cannot be accurate to the street area based on the beam. On the contrary, if the first access network device sends a plurality of beams, an overlapping area of coverage areas of the plurality of beams may be the street area, so that the location of the terminal device can be accurate to the street area. However, when the first access network device sends a large quantity of beams, correspondingly, resource overheads are high.

Therefore, in this embodiment of this application, the first access network device may determine the beam configuration information based on the first location information, for example, determine a proper quantity of beams and a beam in a proper direction, to balance both the resource overheads and the verification location accuracy as much as possible. For example, the first access network device may determine that beams to be sent are a plurality of beams covering the first location area. Considering that the first location area may be unreliable, the first access network device may further determine that in addition to the beam covering the first location area, the sent beams may further include a beam other than the beam covering the first location area.

In addition, considering that there may be an accuracy error in location information reported by using the first location information, it may alternatively be considered that there is an accuracy error in the first location area. To save more resources as much as possible or verify the location of the terminal device more accurately, the first access network device may further determine a more accurate location of the terminal device, and then determine proper beam configuration information. For example, the first access network device may determine the beam configuration information based on the first location information and assistance information. The assistance information may assist the first access network device in further narrowing down the location area of the terminal device. For example, the assistance information may include information about a reference signal that is of a current serving cell and that can be measured by the terminal device, for example, beam information of a cell in which the terminal device is located, for example, an ID of an SSB beam in which the terminal device is located. The assistance information may be previously reported by the terminal device to the first access network device. The first access network device may determine a more accurate location of the terminal device based on the assistance information, and then determine the beam configuration information with reference to the first location information. Because the first access network device may determine a more accurate location of the terminal device based on the assistance information, the subsequently determined beam configuration information is also more proper.

The first access network device may further determine some configuration information based on the first location information, for example, a configuration used by the terminal device to measure the verification information, a configuration used by the terminal device to receive the verification information, and a configuration used by the terminal device to send a feedback result of the verification information. The following describes related content of the configuration information by using examples. How the first access network device determines the configuration information based on the first location information is subsequently described.

The configuration information may include information about the configuration used by the terminal device to measure the verification information, which is also referred to as measurement configuration information. For example, the measurement configuration information may include a configuration for measuring the at least one reference signal, for example, a configuration of a quantity of reference signals that need to be measured. In some examples, the configuration information may include feedback indication information, and the feedback indication information includes the configuration indicating the terminal device to feed back the feedback result of the verification information. The feedback result of the verification information may indicate the beam information corresponding to the verification information received by the terminal device. The terminal device may determine, based on the feedback indication information, whether the feedback result needs to be sent to the first access network device. For example, the feedback indication information indicates the terminal device to send the feedback result. The terminal device receives the feedback indication information, and sends the feedback result to the first access network device.

The configuration information may further include reporting configuration information, and the reporting configuration information may indicate how the terminal device sends the feedback result. For example, the reporting configuration information may include one or more of the following: a reporting manner, a reporting threshold, a reporting format, or the like. The reporting manner is, for example, periodic reporting or aperiodic reporting. The terminal device may send the feedback result in a configured reporting manner. The reporting threshold includes, for example, a signal quality threshold. For example, when the terminal device determines that quality of a received reference signal is greater than or equal to the signal quality threshold, the feedback result sent by the terminal device includes information about the reference signal and/or corresponding beam information, for example, a reference signal ID and/or a beam ID. On the contrary, if quality of a reference signal received by the terminal device is less than or equal to the signal quality threshold, the feedback result sent by the terminal device does not include information about the reference signal and corresponding beam information. The reporting format may indicate content or a form of the feedback result that needs to be sent by the terminal device. For example, if the verification information is the reference signal, the feedback result may include one or more of an ID of the reference signal measured by the terminal device, a frame number, a subframe number, or a symbol corresponding to the measured reference signal, a beam identifier ID, or the like. It may be understood that there is a correspondence between the reference signal ID and the beam ID. Alternatively, the feedback result may include strength of the reference signal. If the verification information is the verification code, the feedback result may include a feedback code corresponding to the verification code received by the terminal device. The feedback code corresponding to the verification code may be the verification code, or the feedback code may be a part of the verification code. If the verification information is the service data, the feedback result may be indication information, for example, ACK or NACK indication information, indicating whether the terminal device receives the service data.

The configuration information may further include reception configuration information, and the reception configuration information may indicate a maximum quantity of pieces of verification information sent by the first access network device. For example, the reception configuration information includes a maximum quantity of reference signals, a maximum quantity of verification codes, a maximum quantity of pieces of service data, or the like sent by the first access network device. The terminal device may determine, based on the reception configuration information, the maximum quantity of pieces of verification information sent by the first access network device.

The first access network device may determine one or more pieces of the foregoing configuration information based on the first location information, or may determine one or more pieces of the foregoing configuration information based on the first location information and the assistance information. For example, the first access network device may determine the reception configuration information, that is, determine the maximum quantity of pieces of verification information sent by the first access network device. Similarly, the first access network device may also determine the verification information based on the first location information, or determine the verification information based on the first location information and the assistance information, for example, determine a quantity of reference signals, a quantity of verification codes, or a quantity of pieces of service data.

After determining the configuration information, the first access network device may send the one or more pieces of the foregoing configuration information to the terminal device. It should be noted that the one or more pieces of the foregoing configuration information may alternatively be predefined or preconfigured. In this case, the first access network device may alternatively not send the one or more pieces of the foregoing configuration information to the terminal device, which is shown by using dashed lines in FIG. 8.

It may be understood that, when the first access network device is in a DU-CU separated architecture of a base station, a CU receives the first location information sent by the terminal device. The CU may determine the beam configuration information and/or the configuration information based on the first location information, or a DU may determine the beam configuration information and/or the configuration information. For example, the CU may send the first location information to the DU, and the DU determines the beam configuration information and/or the configuration information based on the first location information. If the CU determines the configuration information, after determining the configuration information, the CU may send the configuration information to the terminal device, or may send the configuration information to the DU. After receiving the configuration information, the DU sends the configuration information to the terminal device. If the DU determines the configuration information, after determining the configuration information, the DU may send the configuration information to the terminal device, or may send the configuration information to the CU. The CU receives the configuration information, and sends the configuration information to the terminal device.

After determining the verification information, the first access network device sends the verification information to the terminal device. In this embodiment of this application, that the first access network device sends the verification information over the beam may alternatively be understood as that the first access network device sends the beam. Specifically, the first access network device may send the verification information based on the determined configuration information. Usually, a quantity of pieces of verification information sent by the first access network device is the same as the maximum quantity of pieces of verification information configured by the first access network device for sending. In other words, if the maximum quantity of pieces of verification information configured by the first access network device for sending is N, the first access network device sends N pieces of verification information. The maximum quantity of pieces of verification information configured by the first access network device for sending may alternatively be understood as a quantity of pieces of (verification information) that the first access network device indicates the terminal device to measure.

A coverage area of a beam corresponding to a part of the verification information sent by the first access network device includes the first location area. In other words, the terminal device may not be able to measure or receive all of the verification information sent by the first access network device to the terminal device. For example, the first access network device sends eight pieces of verification information by using eight beams, where one piece of verification information is sent by using one beam. Three of the eight beams cover the terminal device, and the other five beams do not cover the terminal device. Because the first access network device determines beams covering the first location area, according to this solution, the terminal can be prevented from falsely reporting a measurement result. For example, a coverage area of a beam corresponding to a reference signal whose number is 4 cannot cover the first location area reported by the terminal device. If the feedback result reported by the terminal device indicates that the reference signal whose number is 4 is measured, the first access network device may consider that the terminal device falsely reports the feedback result.

That the terminal device may not receive a part of the verification information sent by the first access network device is considered. For example, the maximum quantity of pieces of verification information configured by the first access network device for sending is eight. An example in which one piece of verification information corresponds to one beam is used. If three of eight beams corresponding to the eight pieces of verification information cover the terminal device, and the other five beams do not cover the terminal device, the first access network device considers that the terminal device cannot receive the five beams even if the five beams are sent. Therefore, in this embodiment of this application, a quantity of pieces of verification information actually sent by the first access network device may be less than the maximum quantity of pieces of verification information configured by the first access network device for sending, to reduce the resource overheads as much as possible. For example, the maximum quantity of reference signals configured by the first access network device for sending is N, and a quantity of at least one reference signals actually sent by the first access network device to the terminal device is M, where M is less than N. Similarly, the maximum quantity of verification codes sent by the first access network device is P, and a quantity of at least one verification codes actually sent by the first access network device to the terminal device is Q, where Q is less than P. The maximum quantity of pieces of service data sent by the first access network device is L, and a quantity of pieces of at least one piece of service data actually sent by the first access network device to the terminal device is K, where K is less than L. Because the first access network device sends fewer beams, interference can be reduced. In addition, more resources can be saved for data transmission and the like of another terminal device, to improve system performance.

In a possible implementation, the beam is time-varying. In other words, a same beam covers different areas at different time. Different beams need to be used at different moments to cover a same location area. An example in which the verification information is the reference signal is used. For a same location area, the first access network device may send different reference signals at different moments by using different beams, that is, a number of a reference signal that can cover the location area is varying. For example, at a moment T1, a reference signal whose number is 2 can cover the first location area reported by the terminal device, but the reference signal whose number is 4 cannot. At a moment T2, the reference signal whose number is 4 can cover the first location area, but the reference signal whose number is 2 cannot. In other words, the terminal device cannot measure a reference signal in some measurement periodicities. For example, at the moment T1, the terminal device cannot measure the reference signal whose number is 4. In different measurement periodicities, reference signal sets that can be measured by the terminal device are different. For example, at the moment T1, the terminal device can measure the reference signal whose number is 2, and at the moment T2, the terminal device can measure the reference signal whose number is 4. Similarly, if the verification information is the verification code (service data), the first access network device uses different verification codes (service data) at different moments. Because the beam is time-varying, in different measurement periodicities, beam sets that can be measured by the terminal device are different, so that reliability of verifying the location of the terminal device can be improved. In addition, it is more difficult for the terminal device to falsely report the feedback result. In other words, a possibility that the terminal device falsely reports the feedback result is reduced.

It may be understood that, when the first access network device is in the DU-CU separated architecture of the base station, the DU configures the beam, and the DU sends the verification information to the terminal device over the beam. The beam configuration information used by the DU to configure the beam may be determined by the CU, or may be determined by the DU. After determining the beam configuration information, the CU sends the beam configuration information to the DU.

S803: The terminal device sends the feedback result to the first access network device.

The first access network device sends the verification information. If the terminal device receives the verification information, the terminal device may send the feedback result of the verification information to the first access network device. The feedback result may indicate that the terminal device receives corresponding verification information, so that the first access network device may determine beams received by the terminal device, and then verify the location of the terminal device based on coverage areas of these beams.

It may be understood that the feedback result and the verification information are relative. If the verification information is the reference signal, the feedback result is a measurement result of the reference signal, for example, the strength of the reference signal, the reference signal ID, or an ID of a beam corresponding to the reference signal. If the verification information is the verification code, the feedback result may be the feedback code corresponding to the verification code. There is an association relationship between the feedback code and the verification code. For example, the feedback code may be the verification code, or the feedback code may be a part of the verification code. For example, the feedback code may be first several digits in the verification code, or the feedback code may be last several digits in the verification code. Alternatively, the feedback code may be a code word corresponding to the verification code. For example, the feedback code may be a sum of the verification code and a preset value. If the verification information is the service data, the feedback result may be indication information, for example, an acknowledgment (acknowledge, ACK) or a negative acknowledgment (no acknowledge, NACK) for service information, indicating whether the terminal device receives the service data. It should be noted that, if the first access network device receives the ACK sent by the terminal device for the service data, the first access network device may subsequently continue to send the service data to the terminal device, to ensure normal running of a service as much as possible. If the first access network device receives a NACK of the terminal device for service data on a beam, it indicates that the terminal device is not within coverage of the beam. However, the first access network device may still send the service data to the first location area, to ensure the normal running of the service as much as possible.

It may be understood that the terminal device may send the feedback result to the first access network device based on the reporting configuration information. Correspondingly, the first access network device receives the feedback result sent by the terminal device. For example, if the reporting manner indicated by the reporting configuration information is the periodic reporting, the terminal device periodically sends the feedback result to the first access network device. For another example, the reporting configuration information indicates the terminal device to report the frame number of the measured reference signal. The terminal device may send, to the first access network device, a frame number corresponding to the measured or received verification information. In addition, if the first access network device is implemented in a form of the DU-CU separated architecture of the base station, the terminal device may send the feedback result to the DU or the CU.

S804: The first access network device verifies the first location information based on the feedback result.

The feedback result may indicate the beam corresponding to the verification information received by the terminal device, or it may be considered that the feedback result may indicate a beam received by the terminal device. Therefore, the first access network device may verify the location area of the terminal device based on a coverage area of the beam indicated by the feedback result. For example, if the feedback result indicates three beams, the first access network device may determine that the terminal device is located in an overlapping area of areas respectively covered by the three beams, for example, the second location area. In other words, the feedback result may indirectly indicate that the terminal device is located in the second location area.

The first access network device may compare the first location area with the second location area, to determine a location verification result. The location verification result may indicate whether the first location information is reliable. Whether the first location information is reliable may be indicated by reliability of a location area indicated by the first location information. It may alternatively be considered that the location verification result may indicate the reliability of the location area indicated by the first location information. The first access network device verifies whether the first location information is reliable, in other words, determines the reliability of the location area indicated by the first location information. It should be noted that there is an association relationship between the reliability and the verification accuracy. For example, if location area verification accuracy required by network supervision of a geographic area is a street level, the second location area used for location verification should also reach the street level. If the first location area reported by the terminal device has higher accuracy, for example, is accurate to a cell, and the cell is in a street of the second location area, it may be considered that the first location area is reliable in terms of street-level verification accuracy. If the first location area reported by the terminal device has lower accuracy, for example, is at an administrative area level, and the second location area is at a street level, it may be considered that the location area reported by the terminal device does not meet an accuracy requirement. In this case, the first access network device may further determine a current location of the terminal device in the first location area based on the accuracy requirement, to determine whether a service of the terminal device at the current location is legal. Alternatively, when the location area reported by the terminal device does not meet the accuracy requirement, the first access network device may consider that the location area reported by the terminal device is unreliable in terms of the street-level verification accuracy.

If the first location area is located in the second location area, it may be considered that the first location area is reliable, and correspondingly, the reliability is 100%. On the contrary, if there is no overlapping area between the first location area and the second location area, it may be considered that the first location area is unreliable, and correspondingly, the reliability is 0%. If there is an overlapping area between the first location area and the second location area, the reliability may be determined based on a proportion of the overlapping area in the first location area. In some examples, the location verification result may include the reliability of the location area indicated by the first location information. In some examples, the location verification result may indicate whether the first location area is reliable. For example, the location verification result is 1-bit information. That a value of 1 bit is "0" indicates that the first location area is reliable. Correspondingly, that a value of 1 bit is "1" indicates that the first location area is unreliable. Alternatively, that a value of 1 bit is "1" indicates that the first location area is reliable. Correspondingly, that a value of 1 bit is "0" indicates that the first location area is unreliable.

It should be noted that, in the foregoing method, an example in which the first access network device determines the second location area, and then verifies, by comparing the first location area with the second location area, whether the first location area is reliable is used. In a possible implementation, the first access network device does not need to determine the second location area. For example, the first access network device may establish, by using the first location information, the verification information, and the feedback result as inputs, and whether a first information location is reliable as an output according to a machine learning method, a correspondence between the feedback result and whether the first location information is reliable. In this case, the first access network device does not need to first determine the second location area, and may directly verify, based on the feedback result, whether the first location information is reliable. Certainly, the correspondence between the feedback result and whether the first location information is reliable is not limited to a correspondence of a model, and may alternatively be a correspondence of a table. This is not limited in this embodiment of this application.

It may be understood that, when the first access network device is implemented in the form of the DU-CU separated architecture of the base station, the location verification result may be determined by the CU or the DU. For example, the CU receives the feedback result, and may determine the location verification result, or the CU may send the feedback result to the DU, and the DU determines the location verification result. For another example, the DU receives the feedback result, and may determine the location verification result, or the DU may send the feedback result to the CU, and the CU determines the location verification result. It may be understood that, if location verification information is determined by the DU, and the terminal device reports the first location information to the CU, the CU further needs to send, to the DU, the first location information reported by the terminal device.

S805: The first access network device sends first indication information to the terminal device.

If the first access network device determines that the first location area is unreliable, the first access network device may bar the service of the terminal device, to reduce the illegal service. In this case, the first access network device may bar the service of the terminal device. For example, the first access network device releases the terminal device. In addition, the first access network device may notify the terminal device that the first access network device bars the service of the terminal device. For example, the first access network device sends the first indication information to the terminal device, where the first indication information indicates that the service of the terminal device is barred. The terminal device receives the first indication information sent by the first access network device, and may determine that the service is barred. Further, the first indication information may indicate a reason for barring the service of the terminal device, so that the terminal device can determine subsequent behavior based on the service. For example, if service legality is associated with the location area, and the terminal device determines that the service is not allowed because the location area is limited, the terminal device may subsequently perform the service in a location area in which the service is allowed.

It should be noted that, that the service of the terminal device is barred may alternatively be considered as that the terminal device is released. That the first indication information indicates that the service of the terminal device is barred may alternatively be understood as that the first indication information indicates that the terminal device is released. Similarly, that the first indication information indicates the reason for barring the service of the terminal device may alternatively be understood as that the first indication information indicates a reason for releasing the terminal device.

In a possible implementation, the first access network device may trigger an NG interface switching process, to connect the terminal device to another core network device, for example, another AMF. For example, when the first access network device determines, based on the second location area, that the terminal device moves across countries, the first access network device may trigger the NG interface switching process, so that the terminal device accesses an AMF corresponding to a country corresponding to the second location area. The switching process is the same as that in a conventional technology. Details are not described herein again.

It may be understood that, if the location area indicated by the first location information is reliable, the first access network device does not need to send the first indication information. Therefore, S805 is an optional step, and is shown by using dashed lines in FIG. 8.

It may be understood that, when the first access network device is implemented in the DU-CU separated architecture, if the DU determines the reliability, the DU may generate the corresponding first indication information, and send the first indication information to the terminal device. Alternatively, the DU sends the reliability to the CU, the CU generates the first indication information, and the CU sends the first indication information to the terminal device. If the CU determines the reliability, the CU may generate the corresponding first knowledge information, and send the first knowledge information to the terminal device. Alternatively, the CU sends the reliability to the DU, the DU generates the first indication information, and the DU sends the first indication information to the corresponding terminal device.

S806: The first access network device sends second indication information to a core network device.

The second indication information may include the location verification result. After determining the location verification result, the first access network device may send the location verification result to the core network device. If the location verification result indicates that the first location area is unreliable, the core network device may bar the service of the terminal device. For example, the core network device releases the terminal device. Optionally, when determining that the first location area is unreliable, the first access network device sends the second indication information to the core network device. If the first location area is reliable, the first access network device does not need to send the second indication information to the core network device. Therefore, S806 is an optional step, and is shown by using dashed lines in FIG. 8.

If the first location area is unreliable, the first access network device may further request the core network device to release the terminal device. For example, the second indication information may further include information for requesting the core network device to release the terminal device. The core network device may determine, based on the second indication information, to release the terminal device. Alternatively, the first access network device may trigger the NG interface switching process, to request the core network device to switch the terminal device to another core network device. For example, the second indication information may further include information for requesting to switch an NG interface. Because the first location area is unreliable, the first access network device may alternatively request the core network device to locate the terminal device, to update the location of the terminal device. For example, the second indication information may further include information for requesting the core network device to locate the terminal device. Further, the first access network device may notify the core network device of a reason for initiating the request by the first access network device. For example, the second indication information may include information indicating the reason for initiating the request. In a possible implementation, the second indication information may include one or more pieces of the foregoing information. It may alternatively be understood as that the second indication information may further indicate one or more of the following: requesting to disconnect the terminal device, requesting to switch a core network device of the terminal device, the reason for initiating the request, or requesting to locate the terminal device.

It may be understood that, when the first access network device is implemented in the DU-CU separated architecture, if the CU determines the reliability, the CU may determine the second indication information, and send the second indication information to the core network device. If the DU determines the reliability, the DU may send the determined reliability to the CU, and the CU determines the second indication information based on the reliability, and then sends the second indication information to the core network device.

It should be noted that a sequence of performing S805 and S806 is not limited in this embodiment of this application. In other words, S805 may be performed before S806, S805 is performed after S806, or S805 and S806 may be simultaneously performed.

In this embodiment of this application, the first access network device sends, to the terminal device by using the beam, the verification information used to verify the location of the terminal device, for example, the at least one reference signal, the at least one verification code, or the at least one piece of service data. Therefore, the location area reported by the terminal device is verified based on the feedback result of the terminal device for the verification information, that is, the beam corresponding to the received verification information. When determining that the location area reported by the terminal device is unreliable, the first access network device may bar the service of the terminal device, to reduce the illegal service. It may alternatively be considered that, in this embodiment of this application, a terminal device that maliciously reports an error location may be identified, and then a corresponding measure (for example, barring a service) is taken, to ensure network security as much as possible. According to this embodiment of this application, a service that meets a network supervision requirement may be provided, for example, lawful interception (lawful interception), emergency communication (emergency communication), or public warning (public warning service).

In the procedure shown in FIG. 8, an example in which the first access network device verifies the location reported by the terminal device is used. In a possible implementation, the core network device may verify whether the location reported by the terminal device is reliable.

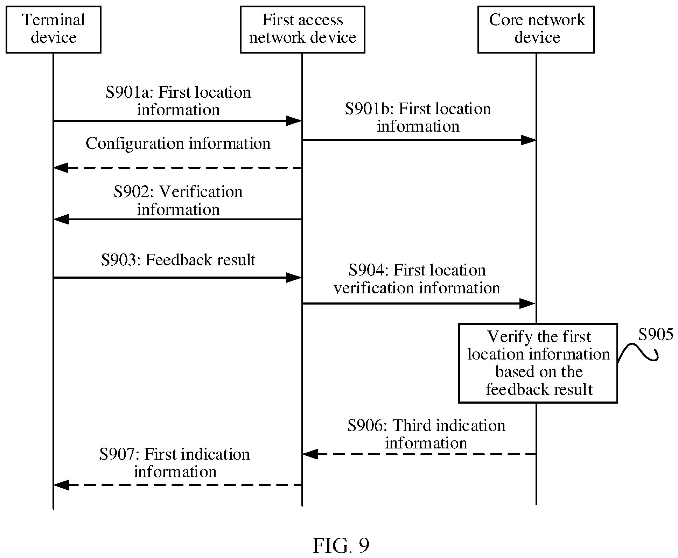

FIG. 9 shows a second method for verifying a location of a terminal device according to an embodiment of this application. A procedure of the method is described as follows.

S901a: The terminal device sends first location information to a first access network device.

An implementation of S901a is the same as that of S801. For details, refer to descriptions of related content of S801. Details are not described herein again.

S901b: The first access network device sends the first location information to a core network device.

After receiving the first location information, the first access network device may send the first location information to the core network device, and the core network device verifies the first location information. The first access network device may transparently transmit the first location information to the core network device, or may parse the first location information, process the first location information, and then send the processed first location information to the core network device.

It may be understood that, when the first access network device is implemented in a DU-CU separated architecture, the first access network device may receive and parse the first location information through a CU, and then send the first location information to the core network device. Alternatively, the first access network device may receive the first location information through a DU, and transparently transmit the first location information to the CU, and then the CU transparently transmits the first location information to the core network device.

S902: The first access network device sends verification information to the terminal device.

An implementation of S902 is the same as that of S802. For details, refer to descriptions of related content of S802. Details are not described herein again.

S903: The first access network device receives a feedback result sent by the terminal device.

An implementation of S903 is the same as that of S803. For details, refer to descriptions of related content of S803. Details are not described herein again.

S904: The first access network device sends first location verification information to the core network device.

The first location verification information may be used by the core network device to verify the first location information. The first location verification information may include the feedback result of the terminal device for the verification information. For example, after receiving the feedback result sent by the terminal device, the first access network device may send the feedback result to the core network device, and the core network device verifies the first location information based on the first location information and the feedback result.

The first location verification information may further include content that assists the core network device in verifying the first location information. For example, the first location verification information may further include configuration information sent by the first access network device to the terminal device, for example, measurement configuration information, reception configuration information, or reporting configuration information. For a specific implementation of the foregoing configuration information, refer to related content of S802. Details are not described herein again. It may be understood that the core network device does not know areas covered by a beam, and therefore cannot determine the location of the terminal device. In some examples, the first location verification information may further include coverage range information of a beam corresponding to the verification information, and the coverage range information may indicate area ranges covered by different beams of the first access network device at different time. The first access network device notifies, by using the coverage range information, the core network device of the area covered by the beam, so that the core network device can verify the location of the terminal device. In some embodiments, the coverage range information may indicate coverage areas of a specific beam at different time. The specific beam includes a beam corresponding to verification information measured and/or received by the terminal device. In other words, coverage range information of a beam that is not measured and/or received by the terminal device does not need to be sent to the core network device, to reduce a transmitted data amount as much as possible.

In some other examples, the first location verification information may further include the verification information, the configuration information of the verification information, configuration information of the beam corresponding to the verification information, at least one piece of TA information of the terminal device, satellite location information corresponding to the at least one piece of TA information, time information corresponding to the at least one piece of TA information, ephemeris information corresponding to the at least one piece of TA information, cell information corresponding to the at least one piece of TA information, or the like. It may be understood that the TA information may indicate a timing advance of the terminal device. A specific implementation form of the TA information is not limited in this embodiment of this application. For example, the TA information may be a TA value, or may be location information of the terminal device used to calculate a TA. The satellite location information corresponding to the TA information may indicate a satellite location corresponding to the timing advance of the terminal device. The time information corresponding to the TA information may indicate time corresponding to the timing advance of the terminal device. The ephemeris information corresponding to the TA information may indicate an ephemeris of a satellite corresponding to the timing advance of the terminal device. The time information corresponding to the TA information and the ephemeris information corresponding to the TA information may be used together to determine ephemerides corresponding to different time. The cell information corresponding to the TA information includes a cell configuration corresponding to the timing advance of the terminal device, for example, a cell reference point, a cell radius, or a cell shape.

It should be noted that some information included in the first location verification information may be sent to the core network device in advance. For example, before the first access network device receives the feedback result of the verification information, the first access network device may send some configuration information and the like to the core network device. Certainly, the first access network device may alternatively send the feedback result, some configuration information, and the like together to the core network device. Alternatively, the first access network device may transparently transmit, to the core network device, the feedback result sent by the terminal device, and the first access network device may send, to the core network device at any time, information in the first location verification information other than the feedback result. In addition, the first access network device may send the first location information and the feedback result to the core network device, or may send the first location information to the core network device. If the first access network device sends the first location information to the core network device, the first access network device may further send, to the core network device, information obtained by processing the feedback result. For example, after receiving the feedback result sent by the terminal device, the first access network device processes the feedback result, to form coverage range information of a beam indicated by the feedback result, and then sends the coverage range information to the core network device. Although the core network device receives the information obtained by processing the feedback result by the first access network device, the core network device may determine the feedback result based on the information.

It should be noted that, in the verification information included in the first location verification information, a coverage area of a beam corresponding to a part of the verification information includes a first location area. After receiving the feedback result, the core network device may determine, based on the coverage range information of the beam, whether the terminal device falsely reports the feedback result.

When the first access network device is implemented in the DU-CU separated architecture, the first location verification information is sent by the CU to the core network device. For example, the first access network device may receive the feedback result through the DU, determine the first location verification information, and send the first location verification information to the CU, and then the CU sends the first location verification information to the core network device. For another example, the first access network device may receive the feedback result through the DU, the DU sends the feedback result to the CU, and the CU determines the first location verification information based on the received feedback result, and then sends the first location verification information to the core network device. For another example, the first access network device receives the feedback result through the CU, determines the first location verification information, and then sends the first location verification information to the core network device.

S905: The core network device verifies the first location information based on the feedback result.

A specific implementation in which the core network device verifies the first location information based on the feedback result is similar to a specific implementation in which the first access network device verifies the first location information based on feedback information. For details, refer to related content of S804. Details are not described herein again.

S906: The core network device sends third indication information to the first access network device.

The third indication information may include a location verification result. After determining the location verification result, the core network device may send the location verification result to the first access network device. If the location verification result indicates that the first location area is unreliable, the core network device may bar a service of the terminal device. For example, the core network device releases the terminal device. Optionally, when determining that the first location area is unreliable, the core network device sends the third indication information to the first access network device. If the first location area is reliable, the core network device does not need to send the third indication information to the first access network device. Therefore, S906 is an optional step, and is shown by using dashed lines in FIG. 9.

If the first location area is unreliable, the core network device may further request the first access network device to release the terminal device. For example, the third indication information may further include information for requesting the first access network device to release the terminal device. The first access network device may determine, based on the third indication information, to release the terminal device. Alternatively, the core network device may request the first access network device to initiate an NG interface switching process, to connect the terminal device to another core network device. For example, the third indication information may further include information for requesting the first access network device to initiate NG interface switching. Further, the core network device may notify the first access network device of a reason for initiating the request by the core network device. For example, the third indication information may include information indicating the reason for initiating the request. In a possible implementation, the third indication information may include one or more pieces of the foregoing information. It may alternatively be understood as that the third indication information may further indicate one or more of the following: requesting to disconnect the terminal device, requesting to switch a core network device of the terminal device, or the reason for initiating the request.

S907: The first access network device sends first indication information to the terminal device.

A specific implementation of S907 is the same as that of S805. For details, refer to related content of S805. Details are not described herein again.

It may be understood that, in the procedure shown in FIG. 9, the first access network device may alternatively be implemented in a form of the DU-CU separated architecture. In this case, the core network device sends the third indication information, and the CU may receive the third indication information. The CU receives the third indication information, and determines to send the first indication information to the terminal device. The CU may send the first indication information to the DU, and the DU sends the first indication information to the terminal device. Alternatively, the CU may send the third indication information to the DU, and the DU determines to send the first indication information to the terminal device, and sends the first indication information to the terminal device.

In this embodiment of this application, the first access network device sends, to the terminal device by using the beam, the verification information used to verify the location of the terminal device, and receives the feedback result of the terminal device for the verification information. The location information of the terminal device and the feedback result may be sent to the core network device. Therefore, the core network device verifies the location reported by the terminal device. Similarly, when it is determined that a location area reported by the terminal device is unreliable, the service of the terminal device may be barred, to reduce an illegal service. In other words, a terminal device that maliciously reports an error location may be identified, and then a corresponding measure (for example, barring a service) is taken, to ensure network security as much as possible. According to this embodiment of this application, a service that meets a network supervision requirement may be provided, for example, lawful interception (lawful interception), emergency communication (emergency communication), or public warning (public warning service). In addition, the terminal device that maliciously reports the error location is identified, and the corresponding measure is taken to ensure the network security. In addition, the core network device verifies the location of the terminal device. This helps protect user privacy.

It may be understood that, due to mobility of the terminal device, to ensure communication continuity, the terminal device needs to switch from a source base station to a target base station. In a process of determining the location of the terminal device based on the TA information, when the terminal device just accesses a second access network device, the second access network device can obtain a plurality of pieces of TA information of the terminal device only after a period of time. In other words, when the terminal device just accesses the second access network device, the second access network device lacks historical TA information that can be used for reference, and needs to obtain the plurality of pieces of TA information of the terminal device after long time, and it takes long time to verify the location of the terminal device. This reduces location verification efficiency.

Therefore, an embodiment of this application provides a third method for verifying a location of a terminal device. The method is applicable to a switching scenario of the terminal device. For example, the terminal device switches from one access network device to another access network device. For ease of description, an example in which the terminal device switches from a first access network device to a second access network device is used below.

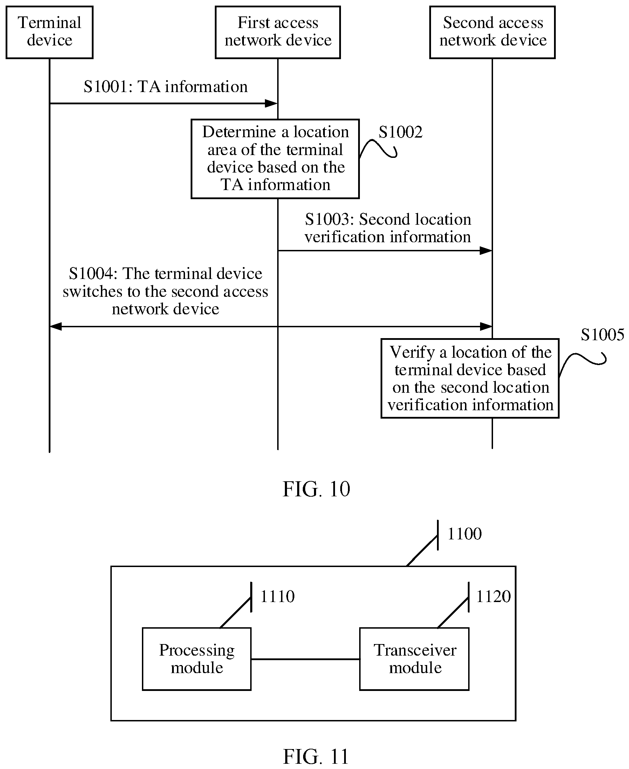

FIG. 10 is a schematic flowchart of a third method for verifying a location of a terminal device according to an embodiment of this application. In the method, an example in which the location of the terminal device is verified based on TA information is used.

S1001: The terminal device sends the TA information to a first access network device.

The terminal device may send the TA information to the first access network device. Correspondingly, the first access network device receives the TA information. The terminal device may send one or more pieces of TA information to the first access network device.

It should be noted that the TA information reported by the terminal device may be superimposed information of TA information from the terminal device to a satellite and TA information from the satellite to the first access network device. For example, the TA information reported by the terminal device includes a sum of a TA value from the terminal device to the satellite and a TA value from the satellite to a base station. The TA information from the satellite to the first access network device may be configured by the first access network device for the terminal device. Alternatively, the TA information from the satellite to the first access network device may be calculated by the terminal device based on a configuration of the first access network device and/or a related protocol. It may be understood that the TA information from the terminal device to the satellite may be used to verify the location of the terminal device. If the TA information reported by the terminal device is superimposed information of the foregoing two types of TA information, the first access network device needs to obtain, from the superimposed information, the TA information from the terminal device to the satellite. How the first access network device obtains, from the superimposed information, the TA information from the terminal device to the satellite is not limited in this embodiment of this application. For example, the first access network device may obtain, from the superimposed information by using an internal algorithm, the TA information from the terminal device to the satellite. Certainly, the TA information reported by the terminal device may be the TA information from the terminal device to the satellite. In this case, the first access network device may verify the location of the terminal device by using the TA information from the terminal device to the satellite. Unless otherwise specified, TA information used to verify the location of the terminal device is the TA information from the terminal device to the satellite.

S 1002: The first access network device verifies a location area of the terminal device based on the TA information.

The first access network device may determine a location area of the terminal device based on the received one or more pieces of TA information. For a principle of determining the location of the terminal device by the first access network device based on the TA information, refer to related content in the embodiment in FIG. 1. Details are not described herein again. It may be understood that, before step S1002, the terminal device has reported the location area of the terminal device to the first access network device.

Optionally, when the first access network device is implemented in a form of a DU-CU separated architecture of a base station, the first access network device may verify the location area of the terminal device through a CU or a DU. For example, the first access network device may receive, through the DU, the TA information sent by the terminal device, to verify the location area of the terminal device. For another example, the first access network device may receive, through the DU, the TA information sent by the terminal device, the DU sends the received TA information to the CU, and the CU verifies, based on the received TA information, the location area of the terminal device. Alternatively, the first access network device may receive, through the CU, the TA information sent by the terminal device, and the CU verifies the location area of the terminal device. It should be understood that, if the DU verifies the location area of the terminal device, and the terminal device reports location information to the CU, the CU should send the location information of the terminal device to the DU.

S1003: The first access network device sends second location verification information to a second access network device.

The first access network device is a serving base station of the terminal device, and the second access network device may be considered as a target base station to which the terminal device is to switch. The second location verification information may be used to assist the second access network device in verifying the location area of the terminal device. For example, the second location verification information may include the TA information used to determine the location of the terminal device. The second access network device may verify the location of the terminal device based on the received TA information. Because the first access network device notifies the second access network device of historical TA information of the terminal device in advance, the second access network device can obtain, without waiting for long time, the TA information that can be used to verify the location of the terminal device. Therefore, a delay in verifying the terminal device can be reduced. Therefore, an illegal service that occurs after the terminal device switches to the second access network device can be barred in a timely manner.

It should be noted that the TA information included in the second location verification information may be the TA information from the terminal device to the satellite, or may be the superimposed information of the TA information from the terminal device to the satellite and the TA information from the satellite to the first access network device. If the TA information included in the second location verification information is the superimposed information of the TA information from the terminal device to the satellite and the TA information from the satellite to the first access network device, the first access network device should further send, to the second access network device, assistance information that can be used to obtain, from the superimposed information, the TA information from the terminal device to the satellite. For example, the first access network device further sends, to the second access network device, the TA information from the satellite to the first access network device, so that the second access network device may obtain, from the superimposed information based on the TA information from the satellite to the first access network device, the TA information from the terminal device to the satellite. In NTN architectures of a transparent mode and a regenerative mode, TA information from the satellite to an access network device may be empty or not empty. This is not limited in this embodiment of this application.

The second location verification information may further include a location verification result and second location information. The second location information may indicate the location area that is of the terminal device and that is determined by the first access network device. For example, the second location information may be first location information. In other words, the first access network device forwards, to the second access network device, the location information reported by the terminal device. For another example, the second location information may alternatively be different from first location information. For example, the first access network device determines that the terminal device is located in a second location area, and the second location information may indicate the second location area. The location verification result is a verification result of the first access network device for the first location information sent by the terminal device. The location verification result may be obtained by the first access network device through the procedure shown in FIG. 8 or FIG. 9.

The second location verification information may further include one or more of the following: at least one piece of TA information of the terminal device, satellite location information corresponding to the at least one piece of TA information, time information corresponding to the at least one piece of TA information, ephemeris information corresponding to the at least one piece of TA information, cell information corresponding to the at least one piece of TA information, verification information, configuration information of a beam corresponding to the verification information, coverage range information of the beam corresponding to the verification information, where the coverage range information indicates coverage areas of the beam at different time, configuration information, or feedback information. The cell information corresponding to the at least one piece of TA information includes, for example, a cell reference point, a cell radius, or a cell shape. An area determined based on the TA information may exceed a range of a cell, but the cell information corresponding to the at least one piece of TA information may limit the location area of the terminal device to the area determined based on the TA information to fall within the cell. Therefore, accuracy of verifying the terminal device can be improved.

In a possible implementation, the second location verification information is carried in a switching request message sent by the first access network device to the second access network device. The switching request message is used to request the second access network device to prepare a resource for the switching. This embodiment of this application is applicable to a scenario in which the terminal device switches between serving base stations. The switching request message sent by the first access network device to the second access network device is reused to carry the second location verification information, so that signaling overheads can be reduced as much as possible.

S1004: The terminal device switches to the second access network device.

The terminal device may switch to the second access network device. A procedure in which the terminal device switches to the second access network device belongs to a conventional technology. Details are not described herein. After switching to the second access network device, the terminal device may report the location of the terminal device to the second access network device. For example, the terminal device may send the second location information to the second access network device, and the second location information may indicate the location area of the terminal device. After switching to the second access network device, the terminal device may further report the TA information of the terminal device to the second access network device, to assist the second access network device in verifying the second location information. For example, the second access network device may verify the second location information based on the TA information from the first access network device and the TA information from the terminal device.

S1005: The second access network device verifies the location of the terminal device based on the second location verification information.

The second access network device receives the second location verification information, and may verify the second location information based on the historical TA information of the terminal device. For example, the second access network device may determine, based on the historical TA information of the terminal device in the second location verification information, a location area of the terminal device, and compare the location area with the location area indicated by the second location information, to determine whether the location of the terminal device is reliable. Alternatively, the second access network device may determine, based on the historical TA information of the terminal device in the second location verification information and the TA information sent by the terminal device, a location area of the terminal device, and compare the location area with the location area indicated by the second location information, to determine whether the location of the terminal device is reliable.

If the first access network device sends, to the second access network device, the location verification result and the corresponding location information reported by the terminal device, the second access network device may determine, based on the location verification result, an integrity record of reporting the location information by the terminal device, and may further determine a frequency and accuracy of verifying the location of the terminal device, to improve location verification efficiency. For example, if the integrity record of the terminal device in the first access network device is good, that is, there is a high probability that the location information reported by the terminal device to the first access network device is reliable, the second access network device may reduce the frequency of verifying the location of the terminal device, or delay time for performing first location verification on the terminal device.

It should be noted that the foregoing specific method in which the second access network device verifies the terminal device based on the second location verification information is merely an example. In a possible implementation, the second access network device may alternatively verify the location of the terminal device based on the second location verification information by using a technical means like a neural network.

It should be noted that a sequence of performing S 1003 and S 1004 is not limited in this embodiment of this application. In other words, S 1003 may be performed before S 1004, S 1003 is performed after S 1004, or S 1003 and S 1004 may be simultaneously performed.

Optionally, the first access network device is implemented in the form of the DU-CU separated architecture, and the second access network device is implemented in a form of a DU-CU separated architecture. In this case, the first access network device may receive, through the DU, the TA information sent by the terminal device, and send the location verification result to the CU after determining the location verification result of the terminal device. The first access network device sends the location verification result to a CU of the second access network device through the CU. Alternatively, the first access network device may receive, through the DU, the TA information sent by the terminal device, and send the TA information of the terminal device to the CU. After determining the location verification result of the terminal device, the CU sends the location verification result to a CU of the second access network device. Alternatively, the first access network device receives the TA information of the terminal device through the CU, and sends the location verification result to a CU of the second access network device after determining the location verification result of the terminal device.

In this embodiment of this application, considering that the target base station and a source base station may not be on a same trajectory, the source base station notifies the target base station of the historical TA information of the terminal device. Because TA information used by the target base station to determine the location of the terminal device is provided by the source base station, and does not need to be obtained from the terminal device by the target base station, time for obtaining the TA information of the terminal device is reduced, thereby improving efficiency of verifying the location of the terminal device. In addition, the target base station determines the location of the terminal device more accurately with reference to the historical TA information of the terminal device. In other words, positioning accuracy of the terminal device can be improved.

It should be noted that, in embodiments of this application, the procedure shown in FIG. 8, the procedure shown in FIG. 9, and the procedure shown in FIG. 10 may be separately performed, or may be combined. For example, the procedure shown in FIG. 8 and the procedure shown in FIG. 9 may be combined with each other, or the procedure shown in FIG. 8 and the procedure shown in FIG. 10 may be combined with each other. The procedure shown in FIG. 9 and the procedure shown in FIG. 10 may be combined with each other, or the procedure shown in FIG. 8, the procedure shown in FIG. 9, and the procedure shown in FIG. 10 may be combined with each other.

In embodiments provided in this application, the methods provided in embodiments of this application are separately described from a perspective of interaction between the terminal device, the access network device, and the core network device. To implement functions in the foregoing methods provided in embodiments of this application, the terminal device, the access network device, and the core network device each may include a hardware structure and/or a software module, to implement the foregoing functions in a form of the hardware structure, the software module, or a combination of the hardware structure and the software module. Whether a specific function in the foregoing functions is performed by the hardware structure, the software module, or the combination of the hardware structure and the software module depends on a particular application and a design constraint condition of the technical solutions.

Based on a same concept as the method embodiments, an embodiment of this application provides a communication apparatus. The following describes, with reference to the accompanying drawings, communication apparatuses configured to implement the foregoing methods in embodiments of this application.

FIG. 11 is a block diagram of a communication apparatus 1100 according to an embodiment of this application. The communication apparatus 1100 may include a processing module 1110 and a transceiver module 1120. Optionally, a storage unit may be further included. The storage unit may be configured to store instructions (code or a program) and/or data. The processing module 1110 and the transceiver module 1120 may be coupled to the storage unit. For example, the processing module 1110 may read the instructions (the code or the program) and/or the data in the storage unit, to implement a corresponding method. The foregoing modules may be independently disposed, or may be partially or completely integrated.

In some possible implementations, the communication apparatus 1100 can correspondingly implement behavior and functions of the access network device in the foregoing method embodiments. The communication apparatus 1100 may be the access network device, may be a component (for example, a chip or a circuit) used in the access network device, or may be a chip or a chip set in the access network device, or a part of the chip configured to perform a related method function.

For example, the communication apparatus 1100 implements the method performed by the first access network device in the embodiment in FIG. 8 or FIG. 9. The transceiver module 1120 is configured to: receive first location information sent by a terminal device, send verification information to the terminal device, and receive a feedback result sent by the terminal device. The verification information includes one or more of the following: at least one reference signal, at least one verification code, or at least one piece of service data. The feedback result includes a measurement result of the at least one reference signal, a feedback code corresponding to the verification code, or indication information, and the indication information indicates whether the terminal device receives the service data. The processing module 1110 is configured to verify the first location information based on the feedback result. Alternatively, the transceiver module 1120 is further configured to send the first location information and the feedback result to a core network device.

In an optional implementation, the processing module 1110 is specifically configured to determine a location verification result based on the feedback result, where the location verification result indicates reliability of a location area indicated by the first location information.

In an optional implementation, one reference signal corresponds to one beam, one verification code corresponds to one beam, and one piece of service data corresponds to one beam.

In an optional implementation, a coverage area of a beam corresponding to a part of the verification information includes a location area indicated by the first location information.

In an optional implementation, the beam covers different areas at different time.

In an optional implementation, the transceiver module 1120 is further configured to send configuration information to the terminal device, where the configuration information indicates one or more of the following: a maximum quantity of reference signals sent by the communication apparatus 1100, a maximum quantity of verification codes sent by the communication apparatus 1100, or a maximum quantity of pieces of service data sent by the communication apparatus 1100. A quantity of the at least one reference signal sent by the communication apparatus 1100 to the terminal device is less than or equal to the maximum quantity. A quantity of the at least one verification code sent by the communication apparatus 1100 to the terminal device is less than or equal to the maximum quantity. A quantity of the at least one piece of service data sent by the communication apparatus 1100 to the terminal device is less than or equal to the maximum quantity.

In an optional implementation, the configuration information includes one or more of the following: measurement configuration information, reception configuration information, feedback indication information, or reporting configuration information. The measurement configuration information includes a configuration for measuring the at least one reference signal. The reception configuration information includes information indicating the maximum quantity of reference signals, the maximum quantity of verification codes, or the maximum quantity of pieces of service data sent by the communication apparatus 1100. The feedback indication information includes a configuration indicating the terminal device to send the feedback result. The reporting configuration information includes one or more of the following: a reporting manner, a reporting threshold, and a reporting format, where the reporting manner includes periodic reporting or aperiodic reporting.

In an optional implementation, the processing module 1110 is further configured to determine the verification information and/or the configuration information based on the first location information. Alternatively, the processing module 1110 is further configured to determine the verification information and/or the configuration information based on the first location information and assistance information. The assistance information includes information about a reference signal that is of a current serving cell and that can be measured by the terminal device.

In an optional implementation, the transceiver module 1120 is further configured to send first indication information to the terminal device. The first indication information indicates that a service of the terminal device is barred, and/or the first indication information indicates a reason for barring the service of the terminal device.

In an optional implementation, the transceiver module 1120 is further configured to send second indication information to the core network device, where the second indication information includes the location verification result.

In an optional implementation, the second indication information further indicates one or more of the following: requesting to disconnect the terminal device, requesting to switch a core network device of the terminal device, a reason for initiating the request, or requesting to locate the terminal device.

In an optional implementation, the transceiver module 1120 is further configured to send first location verification information to the core network device, where the first location verification information includes the first location information and the feedback result.

For another example, the communication apparatus 1100 implements the method performed by the first access network device in the embodiment in FIG. 10. The processing module 1110 is configured to determine second location verification information. The second location verification information includes second location information and second assistance information. The second location information indicates a location area that is of a terminal device and that is determined by the communication apparatus 1100. The second assistance information includes historical TA information used by the communication apparatus 1100 to determine a location of the terminal device. The transceiver module 1120 is configured to send the second location verification information to a second access network device.

For another example, the communication apparatus 1100 implements the method performed by the second access network device in the embodiment in FIG. 10. The transceiver module 1120 is configured to receive second location verification information sent by a first access network device. The second location verification information includes historical TA information used to determine a location of a terminal device. The processing module 1110 is configured to verify the location of the terminal device based on the second location verification information.

In an optional implementation, the second location verification information further includes a location verification result and second location information. The location verification result is a verification result of the first access network device for location information sent by the terminal device. The second location information indicates a location area that is of the terminal device and that is determined by the first access network device.

In an optional implementation, the second location verification information further includes one or more of the following: at least one piece of TA information of the terminal device, satellite location information corresponding to the at least one piece of TA information, time information corresponding to the at least one piece of TA information, ephemeris information corresponding to the at least one piece of TA information, cell information corresponding to the at least one piece of TA information, verification information, configuration information of a beam corresponding to the verification information, coverage range information of the beam corresponding to the verification information, configuration information, or a feedback result. The verification information includes at least one reference signal, at least one verification code, or at least one piece of service data. The coverage range information indicates coverage areas of the beam at different time. The feedback result includes a measurement result of the at least one reference signal, a feedback code corresponding to the verification code, or indication information, and the indication information indicates whether the terminal device receives the service data.

In an optional implementation, the second location verification information is carried in a switching request message sent by the first access network device to the communication apparatus 1110, and the switching request message is used to request the communication apparatus 1110 to prepare a resource for switching.

In some other possible implementations, the communication apparatus 1100 can correspondingly implement behavior and functions of the terminal device in the foregoing method embodiments. The communication apparatus 1100 may be the terminal device, may be a component (for example, a chip or a circuit) used in the terminal device, or may be a chip or a chip set in the terminal device, or a part of the chip configured to perform a related method function.

For example, the communication apparatus 1100 implements the method performed by the terminal device in the embodiment in FIG. 8 or FIG. 9. The transceiver module 1120 is configured to: send first location information to a first access network device, receive verification information sent by the first access network device, and send a feedback result to the first access network device. The verification information includes one or more of the following: at least one reference signal, at least one verification code, or at least one piece of service data. The feedback result includes a measurement result of the at least one reference signal, a feedback code corresponding to the verification code, or indication information, and the indication information indicates whether the communication apparatus 1100 receives the service data.

In an optional implementation, one reference signal corresponds to one beam, one verification code corresponds to one beam, and one piece of service data corresponds to one beam.

In an optional implementation, a coverage area of a beam corresponding to a part of the verification information includes a location area indicated by the first location information.

In an optional implementation, the beam covers different areas at different time.

In an optional implementation, the transceiver module 1120 is further configured to receive configuration information sent by the first access network device, where the configuration information indicates one or more of the following: a maximum quantity of reference signals sent by the first access network device, a maximum quantity of verification codes sent by the first access network device, or a maximum quantity of pieces of service data sent by the first access network device. A quantity of the at least one reference signal sent by the first access network device to the communication apparatus 1100 is less than or equal to the maximum quantity. A quantity of the at least one verification code sent by the first access network device to the communication apparatus 1100 is less than or equal to the maximum quantity. A quantity of the at least one piece of service data sent by the first access network device to the communication apparatus 1100 is less than or equal to the maximum quantity.

In an optional implementation, the transceiver module 1120 is further configured to receive first indication information sent by the first access network device. The first indication information indicates that a service of the communication apparatus 1100 is barred, and/or the first indication information indicates a reason for barring the service of the communication apparatus 1100.

In some other possible implementations, the communication apparatus 1100 can correspondingly implement behavior and functions of the core network device in the foregoing method embodiments. The communication apparatus 1100 may be the core network device, may be a component (for example, a chip or a circuit) used in the core network device, or may be a chip or a chip set in the core network device, or a part of the chip configured to perform a related method function.

For example, the communication apparatus 1100 implements the method performed by the core network device in the embodiment in FIG. 8 or FIG. 9. The transceiver module 1120 is configured to receive first location verification information sent by a first access network device. The first location verification information includes first location information of a terminal device and/or a feedback result of the terminal device for verification information sent by the first access network device. The verification information includes one or more of the following: at least one reference signal, at least one verification code, or at least one piece of service data. The feedback result includes a measurement result of the at least one reference signal, a feedback code corresponding to the verification code, or indication information, and the indication information indicates whether the terminal device receives the service data. The processing module 1110 is configured to verify the first location information based on the feedback result.

In an optional implementation, one reference signal corresponds to one beam, one verification code corresponds to one beam, and one piece of service data corresponds to one beam.

In an optional implementation, the first location verification information further includes one or more of the following: the verification information, configuration information of the verification information, configuration information of a beam corresponding to the verification information, coverage range information of the beam corresponding to the verification information, at least one piece of TA information of the terminal device, satellite location information corresponding to the at least one piece of TA information, time information corresponding to the at least one piece of TA information, ephemeris information corresponding to the at least one piece of TA information, or cell information corresponding to the at least one piece of TA information. The coverage range information indicates coverage areas of the beam at different time. The verification information and/or the configuration information is further determined based on assistance information. The assistance information includes information about a reference signal that is of a current serving cell and that can be currently measured by the terminal device.

In an optional implementation, the transceiver module 1120 is further configured to send third indication information to the first access network device, where the third indication information includes a location verification result. The location verification result indicates reliability of a location area indicated by the first location information.

In an optional implementation, the third indication information further indicates one or more of the following: requesting to disconnect the terminal device, requesting to switch a core network device of the terminal device, a reason for initiating the request, or requesting to locate the terminal device.

It should be understood that the processing module 1110 in this embodiment of this application may be implemented by a processor or a processor-related circuit component, and the transceiver module 1120 may be implemented by a transceiver, a transceiver-related circuit component, or a communication interface.

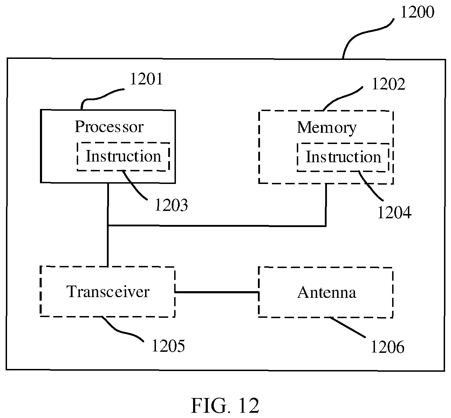

FIG. 12 is a block diagram of a communication apparatus 1200 according to an embodiment of this application. The communication apparatus 1200 may be a terminal device, and can implement functions of the terminal device in the methods provided in embodiments of this application. Alternatively, the communication apparatus 1200 may be an apparatus that can support the terminal device in implementing corresponding functions in the methods provided in embodiments of this application. The communication apparatus 1200 may be a chip system. In this embodiment of this application, the chip system may include a chip, or may include a chip and another discrete device. For a specific function, refer to the descriptions in the foregoing method embodiments. Alternatively, the communication apparatus 1200 may be an access network device, and can implement functions of the first access network device or the second access network device in the methods provided in embodiments of this application. Alternatively, the communication apparatus 1200 may be an apparatus that can support the access network device in implementing corresponding functions in the methods provided in embodiments of this application. The communication apparatus 1200 may be a chip system. In this embodiment of this application, the chip system may include a chip, or may include a chip and another discrete device. For a specific function, refer to the descriptions in the foregoing method embodiments. Alternatively, the communication apparatus 1200 may be a core network device, and can implement functions of the core network device in the methods provided in embodiments of this application. Alternatively, the communication apparatus 1200 may be an apparatus that can support the core network device in implementing corresponding functions in the methods provided in embodiments of this application. The communication apparatus 1200 may be a chip system. In this embodiment of this application, the chip system may include a chip, or may include a chip and another discrete device. For a specific function, refer to the descriptions in the foregoing method embodiments.

The communication apparatus 1200 includes one or more processors 1201 that may be configured to implement or support the communication apparatus 1200 in implementing the functions of the terminal device in the methods provided in embodiments of this application. For details, refer to the detailed descriptions in the method examples. Details are not described herein again. The one or more processors 1201 may alternatively be configured to implement or support the communication apparatus 1200 in implementing the functions of the first access network device or the second access network device in the methods provided in embodiments of this application. For details, refer to the detailed descriptions in the method examples. Details are not described herein again. The one or more processors 1201 may alternatively be configured to implement or support the communication apparatus 1200 in implementing the functions of the core network device in the methods provided in embodiments of this application. For details, refer to the detailed descriptions in the method examples. Details are not described herein again. The processor 1201 may also be referred to as a processing unit or a processing module, and may implement a specific control function. The processor 1201 may be a general-purpose processor, a dedicated processor, or the like. For example, the processor includes a central processing unit, an application processor, a modem processor, a graphics processing unit, an image signal processor, a digital signal processor, a video codec processor, a controller, a memory, and/or a neural network processor. The central processing unit may be configured to control the communication apparatus 1200, execute a software program, and/or process data. Different processors may be independent devices, or may be integrated into one or more processors, for example, integrated into one or more application-specific integrated circuits.

Optionally, the communication apparatus 1200 includes one or more memories 1202, configured to store instructions 1204. The instructions may be run on the processor 1201, to enable the communication apparatus 1200 to perform the method described in the foregoing method embodiments. The memory 1202 and the processor 1201 may be separately disposed, or may be integrated together, or it may be considered that the memory 1202 is coupled to the processor 1201. The coupling in this embodiment of this application may be an indirect coupling or a communication connection between apparatuses, units, or modules in an electrical form, a mechanical form, or another form, and is for information exchange between the apparatuses, the units, or the modules. The processor 1201 may operate in collaboration with the memory 1202. At least one of at least one memory may be included in the processor. It should be noted that the memory 1202 is not necessary, and therefore is shown by using dashed lines in FIG. 12.

Optionally, the memory 1202 may further store data. The processor and the memory may be separately disposed, or may be integrated together. In this embodiment of this application, the memory 1202 may be a non-volatile memory, for example, a hard disk drive (hard disk drive, HDD) or a solid-state drive (solid-state drive, SSD), or may be a volatile memory (volatile memory), for example, a random-access memory (random-access memory, RAM). The memory is any other medium that can carry or store expected program code in a form of an instruction or a data structure and that can be accessed by a computer, but is not limited thereto. The memory in this embodiment of this application may alternatively be a circuit or any other apparatus that can implement a storage function, and is configured to store the program instructions and/or the data.

Optionally, the communication apparatus 1200 may include instructions 1203 (which may also be referred to as code or programs sometimes). The instructions 1203 may be run on the processor, to enable the communication apparatus 1200 to perform the method described in the foregoing embodiments. The processor 1201 may store data.

Optionally, the communication apparatus 1200 may further include a transceiver 1205 and an antenna 1206. The transceiver 1205 may be referred to as a transceiver unit, a transceiver module, a transceiver machine, a transceiver circuit, a transceiver, an input/output interface, or the like, and is configured to implement a transceiver function of the communication apparatus 1200 through the antenna 1206.

The processor 1201 and the transceiver 1205 described in this application may be implemented on an integrated circuit (integrated circuit, IC), an analog IC, a radio frequency integrated circuit (radio frequency identification, RFID), a mixed-signal IC, an ASIC, a printed circuit board (printed circuit board, PCB), an electronic device, or the like. The communication apparatus described in this specification may be implemented by an independent device (for example, an independent integrated circuit or a mobile phone), or may be a part of a large device (for example, a module that may be embedded in another device). For details, refer to the foregoing descriptions about the terminal device and the network device. Details are not described herein again.

Optionally, the communication apparatus 1200 may further include one or more of the following components: a wireless communication module, an audio module, an external memory interface, an internal memory, a universal serial bus (universal serial bus, USB) interface, a power management module, an antenna, a speaker, a microphone, an input/output module, a sensor module, a motor, a camera, a display, or the like. It may be understood that, in some embodiments, the communication apparatus 1200 may include more or fewer components, some components are integrated, or some components are split. These components may be implemented by hardware, software, or a combination of software and hardware.

It should be noted that the communication apparatus in the foregoing embodiment may be a terminal device (or a network device), may be a circuit, or may be a chip used in the terminal device (or the network device), or another combined device, component, or the like having a function of the foregoing terminal (or the network device). When the communication apparatus is the terminal device (or the network device), the transceiver module may be a transceiver, and may include an antenna, a radio frequency circuit, and the like, and the processing module may be a processor, for example, a central processing module (central processing unit, CPU). When the communication apparatus is the component having the function of the foregoing terminal device (or the network device), the transceiver module may be a radio frequency unit, and the processing module may be a processor. When the communication apparatus is a chip system, the communication apparatus may be a field programmable gate array (field programmable gate array, FPGA), an application-specific integrated chip (application-specific integrated circuit, ASIC), a system on chip (system on chip, SoC), a CPU, a network processor (network processor, NP), a digital signal processing circuit (digital signal processor, DSP), a microcontroller (micro controller unit, MCU), a programmable controller (programmable logic device, PLD), or another integrated chip. The processing module may be a processor of the chip system. The transceiver module or the communication interface may be an input/output interface or an interface circuit of the chip system. For example, the interface circuit may be a code/data read/write interface circuit. The interface circuit may be configured to: receive code instructions (the code instructions are stored in a memory, and may be directly read from the memory, or may be read from the memory through another device) and transmit the code instructions to the processor. The processor may be configured to run the code instructions to perform the method in the foregoing method embodiments. For another example, the interface circuit may alternatively be a signal transmission interface circuit between the communication processor and a transceiver machine.

When the communication apparatus is a chip-type apparatus or circuit, the apparatus may include a transceiver unit and a processing unit. The transceiver unit may be an input/output circuit and/or a communication interface. The processing unit is an integrated processor, a microprocessor, or an integrated circuit.

An embodiment of this application further provides a communication system. Specifically, the communication system includes at least one terminal device and at least one first access network device, or may further include at least one second access network device and/or a core network device. For example, the communication system includes an access network device, a terminal device, and a core network device that are configured to implement related functions in one or more of FIG. 8 to FIG. 10. For details, refer to the related descriptions in the foregoing method embodiments. Details are not described herein again.

An embodiment of this application further provides a computer-readable storage medium, including instructions. When the instructions are run on a computer, the computer is enabled to perform the method performed by the first access network device or the second access network device in one or more of FIG. 8 to FIG. 10. Alternatively, when the instructions are run on a computer, the computer is enabled to perform the method performed by the terminal device in one or more of FIG. 8 to FIG. 10. Alternatively, when the instructions are run on a computer, the computer is enabled to perform the method performed by the core network device in one or more of FIG. 8 to FIG. 10.

An embodiment of this application further provides a computer program product, including instructions. When the instructions are run on a computer, the computer is enabled to perform the method performed by the first access network device or the second access network device in one or more of FIG. 8 to FIG. 10. Alternatively, when the instructions are run on a computer, the computer is enabled to perform the method performed by the terminal device in one or more of FIG. 8 to FIG. 10. Alternatively, when the instructions are run on a computer, the computer is enabled to perform the method performed by the core network device in one or more of FIG. 8 to FIG. 10.

An embodiment of this application provides a chip system. The chip system includes a processor, and may further include a memory, configured to implement functions of the first access network device or the second access network device in the foregoing methods, configured to implement functions of the terminal device in the foregoing methods, or configured to implement functions of the core network device in the foregoing methods. The chip system may include a chip, or may include a chip and another discrete device.

It should be understood that sequence numbers of the foregoing processes do not mean execution sequences in various embodiments of this application. The execution sequences of the processes should be determined based on functions and internal logic of the processes, and should not constitute any limitation on implementation processes of embodiments of this application.

A person of ordinary skill in the art may be aware that various illustrative logical blocks (illustrative logical blocks) and steps (steps) described with reference to embodiments disclosed in this specification may be implemented by electronic hardware or a combination of computer software and electronic hardware. Whether the functions are performed by hardware or software depends on a particular application and a design constraint condition of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for specific working processes of the foregoing described system, apparatus, and unit, refer to corresponding processes in the foregoing method embodiments. Details are not described herein again.

In several embodiments provided in this application, it should be understood that the disclosed system, apparatus, and method may be implemented in another manner. For example, the foregoing described apparatus embodiments are merely examples. For example, division into the units is merely logic function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, that is, may be located in one position, or may be distributed on a plurality of network units. Some or all of the units may be selected based on actual needs to achieve the objectives of the solutions of embodiments.

When the functions are implemented in a form of a software functional unit and sold or used as an independent product, the functions may be stored in a computer-readable storage medium. Based on this understanding, a part that essentially contributes to the technical solutions of this application or a part of the technical solutions may be implemented in a form of a software product. The computer software product is stored in a storage medium, and includes several instructions for enabling a computer device (which may be a personal computer, a server, a network device, or the like) to perform all or some steps of the methods in embodiments of this application. The foregoing storage medium includes any medium that can store program code, for example, a USB flash drive, a removable hard disk, a read-only memory (read-only memory, ROM), a RAM, a magnetic disk, or an optical disc.

## Claims

1. A method for verifying a location of a terminal device, comprising:
receiving, by a first access network device, first location information sent by the terminal device;
sending, by the first access network device, verification information to the terminal device, wherein the verification information comprises one or more of the following: at least one reference signal, at least one verification code, or at least one piece of service data;
receiving, by the first access network device, a feedback result sent by the terminal device, wherein the feedback result comprises a measurement result of the at least one reference signal, a feedback code corresponding to the verification code, or indication information, and the indication information indicates whether the terminal device receives the service data; and
verifying, by the first access network device, the first location information based on the feedback result, or sending, by the first access network device, the first location information and the feedback result to a core network device.

2. The method according to claim 1, wherein the verifying, by the first access network device, the first location information based on the feedback result comprises:
determining, by the first access network device, a location verification result based on the feedback result, wherein the location verification result indicates reliability of a location area indicated by the first location information.

3. The method according to claim 1 or 2, wherein one reference signal corresponds to one beam, one verification code corresponds to one beam, and one piece of service data corresponds to one beam.

4. The method according to claim 3, wherein a coverage area of a beam corresponding to a part of the verification information comprises the location area indicated by the first location information.

5. The method according to claim 3 or 4, wherein the beam covers different areas at different time.

6. The method according to any one of claims 1 to 5, wherein the method further comprises: sending, by the first access network device, configuration information to the terminal device, wherein the configuration information indicates one or more of the following:
a maximum quantity of reference signals sent by the first access network device, a maximum quantity of verification codes sent by the first access network device, or a maximum quantity of pieces of service data sent by the first access network device, wherein a quantity of the at least one reference signal sent by the first access network device to the terminal device is less than or equal to the maximum quantity, a quantity of the at least one verification code sent by the first access network device to the terminal device is less than or equal to the maximum quantity, and a quantity of the at least one piece of service data sent by the first access network device to the terminal device is less than or equal to the maximum quantity.

7. The method according to claim 6, wherein the configuration information comprises one or more of the following: measurement configuration information, reception configuration information, feedback indication information, or reporting configuration information, wherein the measurement configuration information comprises a configuration for measuring the at least one reference signal, the reception configuration information comprises information indicating the maximum quantity of reference signals, the maximum quantity of verification codes, or the maximum quantity of pieces of service data sent by the first access network device, the feedback indication information comprises a configuration indicating the terminal device to feed back the feedback result, and the reporting configuration information comprises one or more of the following: a reporting manner, a reporting threshold, and a reporting format, wherein the reporting manner comprises periodic reporting or aperiodic reporting.

8. The method according to any one of claims 4 to 7, wherein the method further comprises:
determining, by the first access network device, the verification information and/or the configuration information based on the first location information; or determining, by the first access network device, the verification information and/or the configuration information based on the first location information and assistance information, wherein the assistance information comprises information about a reference signal that is of a current serving cell and that can be measured by the terminal device.

9. The method according to any one of claims 1 to 8, wherein the method further comprises:
sending, by the first access network device, first indication information to the terminal device, wherein the first indication information indicates that a service of the terminal device is barred, and/or the first indication information indicates a reason for barring the service of the terminal device.

10. The method according to any one of claims 2 to 9, wherein the method further comprises:
sending, by the first access network device, second indication information to the core network device, wherein the second indication information comprises the location verification result.

11. The method according to claim 10, wherein the second indication information further indicates one or more of the following: requesting to disconnect the terminal device, requesting to switch a core network device of the terminal device, a reason for initiating the request, or requesting to locate the terminal device.

12. The method according to any one of claims 1 to 11, wherein the method further comprises:
sending, by the first access network device, first location verification information to the core network device, wherein the first location verification information comprises the first location information and the feedback result.

13. A method for verifying a location of a terminal device, comprising:
sending, by the terminal device, first location information to a first access network device;
receiving, by the terminal device, verification information sent by the first access network device, wherein the verification information comprises one or more of the following: at least one reference signal, at least one verification code, or at least one piece of service data; and
sending, by the terminal device, a feedback result to the first access network device, wherein the feedback result comprises a measurement result of the at least one reference signal, a feedback code corresponding to the verification code, or indication information, and the indication information indicates whether the terminal device receives the service data.

14. The method according to claim 13, wherein one reference signal corresponds to one beam, one verification code corresponds to one beam, and one piece of service data corresponds to one beam.

15. The method according to claim 14, wherein a coverage area of a beam corresponding to a part of the verification information comprises a location area indicated by the first location information.

16. The method according to claim 14 or 15, wherein the beam covers different areas at different time.

17. The method according to any one of claims 13 to 16, wherein the method further comprises: receiving, by the terminal device, configuration information sent by the first access network device, wherein the configuration information indicates one or more of the following:
a maximum quantity of reference signals sent by the first access network device, a maximum quantity of verification codes sent by the first access network device, or a maximum quantity of pieces of service data sent by the first access network device, wherein a quantity of the at least one reference signal sent by the first access network device to the terminal device is less than or equal to the maximum quantity, a quantity of the at least one verification code sent by the first access network device to the terminal device is less than or equal to the maximum quantity, and a quantity of the at least one piece of service data sent by the first access network device to the terminal device is less than or equal to the maximum quantity.

18. The method according to any one of claims 13 to 17, wherein the method further comprises:
receiving, by the terminal device, first indication information sent by the first access network device, wherein the first indication information indicates that a service of the terminal device is barred, and/or the first indication information indicates a reason for barring the service of the terminal device.

19. A method for verifying a location of a terminal device, comprising:
receiving, by a core network device, first location verification information sent by a first access network device, wherein the first location verification information comprises first location information of the terminal device and a feedback result of the terminal device for verification information sent by the first access network device, the verification information comprises one or more of the following: at least one reference signal, at least one verification code, or at least one piece of service data, the feedback result comprises a measurement result of the at least one reference signal, a feedback code corresponding to the verification code, or indication information, and the indication information indicates whether the terminal device receives the service data; and
verifying, by the core network device, the first location information based on the feedback result.

20. The method according to claim 19, wherein one reference signal corresponds to one beam, one verification code corresponds to one beam, and one piece of service data corresponds to one beam.

21. The method according to claim 19 or 20, wherein the first location verification information further comprises one or more of the following: the verification information, configuration information of the verification information, configuration information of a beam corresponding to the verification information, coverage range information of the beam corresponding to the verification information, at least one piece of timing advance TA information of the terminal device, satellite location information corresponding to the at least one piece of TA information, time information corresponding to the at least one piece of TA information, ephemeris information corresponding to the at least one piece of TA information, or cell information corresponding to the at least one piece of TA information, wherein the coverage range information indicates coverage areas of the beam at different time, the verification information and/or the configuration information is further determined based on assistance information, and the assistance information comprises information about a reference signal that is of a current serving cell and that can be currently measured by the terminal device.

22. The method according to any one of claims 19 to 21, wherein the method further comprises:
sending, by the core network device, third indication information to the first access network device, wherein the third indication information comprises a location verification result, and the location verification result indicates reliability of a location area indicated by the first location information.

23. The method according to any one of claims 19 to 22, wherein the third indication information further indicates one or more of the following: requesting to disconnect the terminal device, requesting to switch a core network device of the terminal device, a reason for initiating the request, or requesting to locate the terminal device.

24. A method for verifying a location of a terminal device, comprising:
receiving, by a second access network device, second location verification information sent by a first access network device, wherein the second location verification information comprises historical timing advance TA information used by the first access network device to determine the location of the terminal device; and
verifying, by the second access network device, the location of the terminal device based on the second location verification information.

25. The method according to claim 24, wherein the second location verification information further comprises a location verification result and second location information, the location verification result is a verification result of the first access network device for location information sent by the terminal device, and the second location information indicates a location area that is of the terminal device and that is determined by the first access network device.

26. The method according to claim 24, wherein the second location verification information further comprises one or more of the following: verification information, configuration information, a feedback result, at least one piece of TA information of the terminal device, satellite location information corresponding to the at least one piece of TA information, time information corresponding to the at least one piece of TA information, ephemeris information corresponding to the at least one piece of TA information, cell information corresponding to the at least one piece of timing advance TA information, configuration information of a beam corresponding to the verification information, or coverage range information of the beam corresponding to the verification information, wherein the verification information comprises at least one reference signal, at least one verification code, or at least one piece of service data, the coverage range information indicates coverage areas of the beam at different time, the feedback result comprises a measurement result of the at least one reference signal, a feedback code corresponding to the verification code, or indication information, and the indication information indicates whether the terminal device receives the service data.

27. The method according to any one of claims 24 to 26, wherein the second location verification information is carried in a switching request message sent by the first access network device to the second access network device, and the switching request message is used to request the second access network device to prepare a resource for switching.

28. A method for verifying a location of a terminal device, comprising:
determining, by a first access network device, second location verification information, wherein the second location verification information comprises historical timing advance TA information used by the first access network device to determine the location of the terminal device; and
sending, by the first access network device, the second location verification information to a second access network device.

29. A communication apparatus, comprising a processing module and a transceiver module, wherein
the transceiver module is configured to: receive, by a device, first location information sent by a terminal device, send verification information to the terminal device, and receive a feedback result sent by the terminal device, wherein the verification information comprises one or more of the following: at least one reference signal, at least one verification code, or at least one piece of service data, the feedback result comprises a measurement result of the at least one reference signal, a feedback code corresponding to the verification code, or indication information, and the indication information indicates whether the terminal device receives the service data; and
the processing module is configured to verify the first location information based on the feedback result, or the transceiver module is further configured to send the first location information and the feedback result to a core network device.

30. The apparatus according to claim 29, wherein that the processing module is configured to verify the first location information based on the feedback result comprises:
the processing module is configured to determine a location verification result based on the feedback result, wherein the location verification result indicates reliability of a location area indicated by the first location information.

31. The apparatus according to claim 29 or 30, wherein one reference signal corresponds to one beam, one verification code corresponds to one beam, and one piece of service data corresponds to one beam.

32. The apparatus according to claim 31, wherein a coverage area of a beam corresponding to a part of the verification information comprises the location area indicated by the first location information.

33. The apparatus according to claim 31 or 32, wherein the beam covers different areas at different time.

34. The apparatus according to any one of claims 29 to 33, wherein the method further comprises: the transceiver module is further configured to send configuration information to the terminal device, wherein the configuration information indicates one or more of the following:
a maximum quantity of reference signals sent by the communication apparatus, a maximum quantity of verification codes sent by the communication apparatus, or a maximum quantity of pieces of service data sent by the communication apparatus, wherein a quantity of the at least one reference signal sent by the communication apparatus to the terminal device is less than or equal to the maximum quantity, a quantity of the at least one verification code sent by the communication apparatus to the terminal device is less than or equal to the maximum quantity, and a quantity of the at least one piece of service data sent by the communication apparatus to the terminal device is less than or equal to the maximum quantity.

35. The apparatus according to claim 34, wherein the configuration information comprises one or more of the following: measurement configuration information, reception configuration information, feedback indication information, or reporting configuration information, wherein the measurement configuration information comprises a configuration for measuring the at least one reference signal, the reception configuration information comprises information indicating the maximum quantity of reference signals, the maximum quantity of verification codes, or the maximum quantity of pieces of service data sent by the communication apparatus, the feedback indication information comprises a configuration indicating the terminal device to feed back the feedback result, and the reporting configuration information comprises one or more of the following: a reporting manner, a reporting threshold, and a reporting format, wherein the reporting manner comprises periodic reporting or aperiodic reporting.

36. The apparatus according to any one of claims 32 to 35, wherein the processing module is further configured to:
determine the verification information and/or the configuration information based on the first location information; or determine the verification information and/or the configuration information based on the first location information and assistance information, wherein the assistance information comprises information about a reference signal that is of a current serving cell and that can be measured by the terminal device.

37. The apparatus according to any one of claims 29 to 36, wherein the transceiver module is further configured to:
send first indication information to the terminal device, wherein the first indication information indicates that a service of the terminal device is barred, and/or the first indication information indicates a reason for barring the service of the terminal device.

38. The apparatus according to any one of claims 30 to 37, wherein the transceiver module is further configured to:
send second indication information to the core network device, wherein the second indication information comprises the location verification result.

39. The apparatus according to claim 38, wherein the second indication information further indicates one or more of the following: requesting to disconnect the terminal device, requesting to switch a core network device of the terminal device, a reason for initiating the request, or requesting to locate the terminal device.

40. The apparatus according to any one of claims 29 to 39, wherein the transceiver module is further configured to:
send first location verification information to the core network device, wherein the first location verification information comprises the first location information and the feedback result.

41. A communication apparatus, comprising a processing module and a transceiver module, wherein
the processing module is configured to determine first location information; and
the transceiver module is configured to: send the first location information to a first access network device, receive verification information sent by the first access network device, and send a feedback result to the first access network device, wherein the verification information comprises one or more of the following: at least one reference signal, at least one verification code, or at least one piece of service data, the feedback result comprises a measurement result of the at least one reference signal, a feedback code corresponding to the verification code, or indication information, and the indication information indicates whether the communication apparatus receives the service data.

42. The apparatus according to claim 41, wherein one reference signal corresponds to one beam, one verification code corresponds to one beam, and one piece of service data corresponds to one beam.

43. The apparatus according to claim 42, wherein a coverage area of a beam corresponding to a part of the verification information comprises a location area indicated by the first location information.

44. The apparatus according to claim 42 or 43, wherein the beam covers different areas at different time.

45. The apparatus according to any one of claims 41 to 44, wherein the transceiver module is further configured to receive configuration information sent by the first access network device, wherein the configuration information indicates one or more of the following:
a maximum quantity of reference signals sent by the first access network device, a maximum quantity of verification codes sent by the first access network device, or a maximum quantity of pieces of service data sent by the first access network device, wherein a quantity of the at least one reference signal sent by the first access network device to the communication apparatus is less than or equal to the maximum quantity, a quantity of the at least one verification code sent by the first access network device to the communication apparatus is less than or equal to the maximum quantity, and a quantity of the at least one piece of service data sent by the first access network device to the communication apparatus is less than or equal to the maximum quantity.

46. The apparatus according to any one of claims 41 to 45, wherein the transceiver module is further configured to receive first indication information sent by the first access network device, wherein the first indication information indicates that a service of a terminal device is barred, and/or the first indication information indicates a reason for barring the service of the terminal device.

47. A communication apparatus, comprising a processing module and a transceiver module, wherein
the transceiver module is configured to receive first location verification information sent by a first access network device, wherein the first location verification information comprises first location information of a terminal device and a feedback result of the terminal device for verification information sent by the first access network device, the verification information comprises one or more of the following: at least one reference signal, at least one verification code, or at least one piece of service data, the feedback result comprises a measurement result of the at least one reference signal, a feedback code corresponding to the verification code, or indication information, and the indication information indicates whether the terminal device receives the service data; and
the processing module is configured to verify the first location information based on the feedback result.

48. The apparatus according to claim 47, wherein one reference signal corresponds to one beam, one verification code corresponds to one beam, and one piece of service data corresponds to one beam.

49. The apparatus according to claim 47 or 48, wherein the first location verification information further comprises one or more of the following: the verification information, configuration information of the verification information, configuration information of a beam corresponding to the verification information, coverage range information of the beam corresponding to the verification information, at least one piece of timing advance TA information of the terminal device, satellite location information corresponding to the at least one piece of TA information, time information corresponding to the at least one piece of TA information, ephemeris information corresponding to the at least one piece of TA information, or cell information corresponding to the at least one piece of TA information, wherein the coverage range information indicates coverage areas of the beam at different time, the verification information and/or the configuration information is further determined based on assistance information, and the assistance information comprises information about a reference signal that is of a current serving cell and that can be currently measured by the terminal device.

50. The apparatus according to any one of claims 47 to 49, wherein the transceiver module is further configured to:
send third indication information to the first access network device, wherein the third indication information comprises a location verification result, and the location verification result indicates reliability of a location area indicated by the first location information.

51. The apparatus according to any one of claims 47 to 50, wherein the third indication information further indicates one or more of the following: requesting to disconnect the terminal device, requesting to switch a communication apparatus of the terminal device, a reason for initiating the request, or requesting to locate the terminal device.

52. A communication apparatus, comprising a processing module and a transceiver module, wherein
the transceiver module is configured to receive second location verification information sent by a first access network device, wherein the second location verification information comprises historical timing advance TA information used by the first access network device to determine a location of a terminal device; and
the processing module is configured to verify the location of the terminal device based on the second location verification information.

53. The apparatus according to claim 52, wherein the second location verification information further comprises a location verification result and second location information, the location verification result is a verification result of the first access network device for location information sent by the terminal device, and the second location information indicates a location area that is of the terminal device and that is determined by the first access network device.

54. The apparatus according to claim 52, wherein the second location verification information further comprises one or more of the following: verification information, configuration information, a feedback result, at least one piece of TA information of the terminal device, satellite location information corresponding to the at least one piece of TA information, time information corresponding to the at least one piece of TA information, ephemeris information corresponding to the at least one piece of TA information, cell information corresponding to the at least one piece of timing advance TA information, configuration information of a beam corresponding to the verification information, or coverage range information of the beam corresponding to the verification information, wherein the verification information comprises at least one reference signal, at least one verification code, or at least one piece of service data, the coverage range information indicates coverage areas of the beam at different time, the feedback result comprises a measurement result of the at least one reference signal, a feedback code corresponding to the verification code, or indication information, and the indication information indicates whether the terminal device receives the service data.

55. The apparatus according to any one of claims 52 to 54, wherein the second location verification information is carried in a switching request message sent by the first access network device to the communication apparatus, and the switching request message is used to request the communication apparatus to prepare a resource for switching.

56. A communication apparatus, comprising a processing module and a transceiver module, wherein
the processing module is configured to determine second location verification information, wherein the second location verification information comprises historical timing advance TA information used by the communication apparatus to determine a location of a terminal device; and
the transceiver module is configured to send the second location verification information to a second access network device.

57. A communication apparatus, wherein the communication apparatus comprises a processor and a communication interface, the communication interface is configured to input and/or output information, and the processor is configured to execute a computer program, to enable the communication apparatus to perform the method according to any one of claims 1 to 12, to enable the communication apparatus to perform the method according to any one of claims 13 to 18, to enable the communication apparatus to perform the method according to any one of claims 19 to 23, to enable the communication apparatus to perform the method according to any one of claims 24 to 27, or to enable the communication apparatus to perform the method according to claim 28.

58. The communication apparatus according to claim 57, wherein the communication apparatus is a chip or a chip system.

59. A computer-readable storage medium, wherein the computer-readable storage medium stores a computer program, and when the computer program is executed by a computer, the computer is enabled to perform the method according to any one of claims 1 to 12, the computer is enabled to perform the method according to any one of claims 13 to 18, the computer is enabled to perform the method according to any one of claims 19 to 23, the computer is enabled to perform the method according to any one of claims 24 to 27, or the computer is enabled to perform the method according to claim 28.

60. A computer program product, wherein the computer program product comprises computer program code, and when the computer program code is run, the method according to any one of claims 1 to 12 is performed, the method according to any one of claims 13 to 18 is performed, the method according to any one of claims 19 to 23 is performed, the method according to any one of claims 24 to 27 is performed, or the method according to claim 28 is performed.
